(19) Europäisches Patentamt
European Patent Office
Office européen des brevets

(11) **EP 3 262 745 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(51) Int Cl.:
***H02N 2/10*** *(2006.01)*          ***B60K 7/00*** *(2006.01)*
***B62D 59/04*** *(2006.01)*

(21) Anmeldenummer: **16705488.1**

(22) Anmeldetag: **17.02.2016**

(86) Internationale Anmeldenummer:
**PCT/EP2016/053309**

(87) Internationale Veröffentlichungsnummer:
**WO 2016/135013 (01.09.2016 Gazette 2016/35)**

(54) **REKUPERATIONSFÄHIGE ANTRIEBSVORRICHTUNG**

REGENERATIVE DRIVE SYSTEM

DISPOSITIF D'ENTRAÎNEMENT À RÉCUPÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2015 DE 102015102711**

(43) Veröffentlichungstag der Anmeldung:
**03.01.2018 Patentblatt 2018/01**

(73) Patentinhaber: **KNORR-BREMSE Systeme für Nutzfahrzeuge GmbH**
**80809 München (DE)**

(72) Erfinder: **BAUMGARTNER, Johann**
**85368 Moosburg (DE)**

(56) Entgegenhaltungen:
EP-A2- 2 306 047          WO-A1-2011/163530
DE-A1- 10 113 660          DE-A1-102005 032 725
DE-C1- 19 538 978          US-A- 5 763 980

**Beschreibung**

Die vorliegende Erfindung betrifft eine rekuperationsfähige Antriebsvorrichtung zur Erzeugung einer Drehbewegung, insbesondere für ein Fahrzeug, nach dem Oberbegriff des Anspruchs 1.

Rekuperationsfähige Antriebsvorrichtungen für Fahrzeuge sind aus dem Stand der Technik bekannt.

Rekuperatives Bremsen wird im Straßenfahrzeugbau im Hinblick auf mögliche Energie- und $CO_2$ - Reduzierungen intensiv verfolgt. Auch im Bereich schwerer Nutzfahrzeuge gibt es bereits Ansätze zur Nutzung des rekuperativen Bremsens, insbesondere bei Sonderfahrzeugen mit einem spezifischen Anwendungsprofil, wie z.B. Müllsammelfahrzeuge. Neben der bereits erwähnten Einsparung an Kraftstoffverbrauch und der damit verbundenen $CO_2$ - Reduzierung ermöglicht die zusätzliche Antriebsleistung aus der Nutzung der gespeicherten Bremsenergie eine kleinere Dimensionierung der Antriebsaggregate (Downsizing) woraus sich weitere Einsparungen ergeben.

Bei vielen üblichen Lastzügen im Fernverkehrseinsatz wird der überwiegende Teil des Gesamtfahrzeuggewichts vom Anhängerfahrzeug getragen. Dementsprechend ist auch die Zuordnung der Anzahl der Achsen des Motorwagens bzw. der Sattelzugmaschine zu den Achsen des Anhängerfahrzeugs sehr häufig 2:3, insbesondere dann, wenn als Anhängerfahrzeug ein Sattelauflieger und / oder ein Anhänger z.B. mit einer Drehschemelachse, an der sich auch die Zugdeichsel befindet, und zwei ungelenkten (Hinter-)Achsen, verwendet wird.

Das Anhängerfahrzeug weist in dem Fall nicht nur die größere Zahl der Achsen auf, sondern bietet auch an diesen Achsen die weitaus günstigeren Bedingungen für die Installation der zum rekuperativen Bremsen benötigten Aggregate, als sie der Motorwagen bzw. die Sattelzugmaschine an der Antriebs- oder der Lenkachse aufweist.

Dieser Gedanke wird in der DE 10 2010 042 907 A1 aufgegriffen, wonach vorgesehen ist, dass das System zur Rekuperation von kinetischer Energie eine Maschine aufweist, die dazu ausgebildet ist, wenigstens einen Teil einer kinetischen Energie des Anhängers während eines Verzögerungsvorgangs des Anhängers umzuwandeln. Ein Energiespeicher ist dazu ausgebildet, die umgewandelte Energie von der Maschine aufzunehmen, zu speichern und gespeicherte Energie zur Rückumwandlung in kinetische Energie an die Maschine abzugeben.

Als nachteilig wird angesehen, dass nach der offenbarten Lösung der DE 10 2010 042 907 A1 ausschließlich der Fahrzeuganhänger mit einem Rekuperationssystem ausgestattet ist.

Falls der Motorwagen bzw. die Sattelzugmaschine zusätzliche Tragachsen (Vor- oder Nachlaufachsen) aufweist, können aber diese in gleicher Weise wie die Anhängerachsen mit rekuperativen Bremseinrichtungen ausgestattet werden, da Vor- und Nachlaufachsen nahezu den gleichen konstruktiven Aufbau aufweisen wie Anhängerachsen.

Dieser Gedanke wird in der DE 10 2006 046 419 A1 aufgegriffen, welche eine elektrische Antriebsbaugruppe für eine Achse eines Fahrzeugs beschreibt. Bei der in der DE 10 2006 046 419 A1 vorgestellten Lösung ist es vorgesehen, dass die Achse mit der elektrischen Antriebsbaugruppe nach DE 10 2006 046 419 A2 ausschließlich über diese angetrieben wird. Eine elektrische Maschine kann über eine Übersetzungseinrichtung und ein Differentialgetriebe mit den Antriebswellen der Achse verbunden werden. Insofern ist die elektrische Maschine -hier in herkömmlicher Bauart als Drehfeld- bzw. Wanderfeldmaschine angegeben- zwischen den Rädern der Achse bzw. des Fahrzeugs angeordnet.

Nach der DE 10 2006 046 419 A2 ist auch ein Rekuperationsbetrieb z.B. über einen Energiespeicher der elektrischen Antriebsbaugruppe möglich.

Diese Lösung erfordert allerdings bei Nutzfahrzeugen, die auch heute noch mehrheitlich Starrachsen aufweisen, eine Modifikation des Achssystems. Der Achsrohrdurchmesser ist hierbei so groß zu dimensionieren, dass ein Generator für beide Räder oder je ein Generator pro Rad im Hohlraum des Achsrohrs installierbar ist. Der Antrieb erfolgt dann dementsprechend mittels Antriebswellen zum Fahrzeugrad. Das Übersetzungsgetriebe kann in den Rädern oder im Achskörper angeordnet sein. Die Achse kann zum Zweck der Zugänglichkeit der elektrischen Maschine demontierbar sein oder bei der Endmontage mit installierter elektrischer Maschine durch Schweißen verschlossen sein. Es besteht dann allerdings keine Austauschmöglichkeit der elektrischen Maschine.

Alternativ zur Anordnung einer elektrischen Maschine im Achsrohr der Starrachse eines Nutzfahrzeugs ist auch die Anordnung als Radnabenantrieb z.B. über ein Getriebe denkbar.

Die DE 41 10 638 A1 beschreibt einen elektrischen Nabenantrieb für Kraftfahrzeuge, wobei eine Radnabenwelle, die von einem Motoranker einer elektrischen Maschine über ein Planetengetriebe angetrieben wird, auf der dem Radflansch gegenüberliegenden Seite des Motorgehäuses einen umlaufenden Teil einer Scheibenbremse trägt. Eine Rekuperationsfähigkeit bzw. Einrichtungen bzw. Mittel dazu, ist / sind in der DE 41 10 638 A1 nicht angegeben.

Hierbei wird jedoch die Anordnung der elektrischen Maschine in herkömmlicher Bauart als Drehfeld- bzw. Wanderfeldmaschine mit entsprechend schweren Spulen zur Erzeugung eines Dreh- bzw. Wanderfeldes im Bereich des Rades als nachteilig angesehen, da der Nabenantrieb nach der DE 41 10 468 A1 die ungefederten Massen eines Kraftfahrzeugs erheblich erhöht und dadurch die fahrdynamischen Eigenschaften und damit auch die Fahrsicherheit des Kraftfahrzeugs negativ beeinflusst werden können.

Alternativ ist auch ein direkter Antrieb der Radnabe denkbar.

Als Beispiel dazu sei die DE 199 48 224 C1 genannt, welche ein Fahrzeug mit zumindest einer gegenüber dem Fahrzeug um eine Radachse drehbar gelagerten Radnabe und einem oder mehrere an der Radnabe mittels einer Felge befestigten Rad bzw. Rädern beschreibt. Eine elektrische Maschine, die einen um eine gemeinsame Maschinenachse angeordneten Rotor und einen Stator aufweist, wobei der i Rotor zumindest mittelbar mit der Radnabe verbunden und ein Hohlkörper ist, der unmittelbar mit der Felge und /oder mit der Radnabe verbunden ist, werden angegeben.

Durch die Gestaltung des Rotors als Hohlkörper kann durch den Durchlass des Rotors eine Antriebswelle eines konventionellen Antriebs, wie z.B. einer Verbrennungskraftmaschine, geführt werden, so dass die elektrische Maschine jederzeit zuschalt- oder abschaltbar ist, da die elektrische Maschine direkt, d.h. ohne zusätzliche Nabenantriebswelle etc. ein Drehmoment auf das anzutreibende Rad ausübt. Eine Rekuperationsfähigkeit bzw. Einrichtungen bzw. Mittel dazu, sind in der DE 199 48 224 C1 nicht beschrieben.

Hierbei wird es auch als nachteilig angesehen, dass die elektrische Maschine -hier in herkömmlicher Bauart als Drehfeld- bzw. Wanderfeldmaschine - durch entsprechend schweren Spulen zur Erzeugung eines Dreh- bzw. Wanderfeldes im Bereich des Rades die ungefederten Massen eines Kraftfahrzeugs erheblich erhöht und dadurch die fahrdynamischen Eigenschaften und damit auch die Fahrsicherheit des Kraftfahrzeugs negativ beeinflusst.

Ein für den Einsatz in solchen Straßenfahrzeugen geeignetes Konzept einer rekuperationsfähigen Antriebsvorrichtung könnte weiterhin so aussehen, dass die Achsen des Anhängerfahrzeugs den überwiegenden Anteil der rekuperativen Bremsarbeit leisten und die rückgewonnene (elektrische) Energie im Anhängerfahrzeug gespeichert wird.

Außerdem ist vorstellbar, dass der Motorwagen anstelle eines Retarders, idealerweise an der Antriebsstelle desselben, mit einer elektrischen Maschine ausgestattet wird, die ebenfalls rekuperative Bremsarbeit leistet und auch eine entsprechende Antriebsleistung abgeben kann. Hierbei wird vorausgesetzt, dass die gesamte Dauerbremsleistung der rekuperativen Bremseinrichtungen von Motorwagen und Anhängefahrzeug den Retarder überflüssig macht. Der Entfall des Retarders und seiner notwendigen Wärmetauschereinrichtung kann bereits die für das rekuperative Bremsen anfallenden Mehrkosten zu einem großen Teil kompensieren.

Bzgl. des Antriebs im Anhängerfahrzeug sind gesetzliche Vorschriften zu beachten. Zur Sicherstellung der Fahrstabilität ist eine geeignete Koppelkraftregelung erforderlich, mit der sichergestellt wird, dass der Anhänger unter keinen Umständen auf den Motorwagen bzw. auf die Sattelzugmaschine aufschiebt, der Motorwagen bzw. die Sattelzugmaschine also in jedem Fall noch eine Mindestzugkraft aufbringt.

Diesen Gedanken greift die DE 10 2010 042 907 A1 ebenfalls auf.

Die Steuerung des Rekuperationssystem nach der DE 10 2010 042 907 A1 ist derart zum Steuern der Maschine ausgebildet, dass die Maschine kinetische Energie zum Aufnehmen durch den Energiespeicher mit einem Grad umwandelt, der mit dem Maß korreliert, um den die Schubkraft des Anhängerfahrzeugs ein Zusammendrücken einer Auflaufbremskupplung bewirkt. Der Grad der Energieumwandlung kann dabei proportional zu der Kraft sein.

Insbesondere kann die Rekuperation in einem Maß erfolgen, das proportional zur Bremswirkung einer zusätzlichen Betriebsbremse, wie z.B. einem Retarder eingestellt ist.

Es wird jedoch als nachteilig gesehen, dass nach der Lösung der DE 10 2010 042 907 A1 nur der Fahrzeuganhänger mit einem Rekuperationssystem ausgestattet ist.

Denkbar ist auch, dass die Steuerung einer rekuperationsfähigen Antriebsvorrichtung im Zusammenspiel mit einem Energiespeicher für Fahrzeuge quasi ein vorausschauendes Energiemanagement abhängig von der zu fahrenden Fahrtstrecke betreibt, so dass stets genügend rekuperative Energie für die jeweilige Fahrtstrecke zur Verfügung steht, um eine maximale Energieeinsparung für einen konventionellen Antrieb des Fahrzeugs aus der zurückzulegenden Fahrtstrecke zu generieren.

Diesen Gedanken greift die DE 10 2011 118 543 A1 auf. Es wird ein aus einer Steuerung oder Regelung der rekuperationsfähigen Antriebsvorrichtung resultierender Ladezustand eines Energiespeichers in Abhängigkeit einer voraus liegenden Fahrtstrecke, der auf dieser Fahrtstrecke prognostizierten rekuperierbaren elektrischer Energie und/oder einem prognostizierten Energiebedarf einer Nebenabtriebsfunktion prädiktiv gesteuert oder geregelt.

Es wird jedoch als nachteilig angesehen, dass die prädiktive Steuerung oder Regelung nur für einen "herkömmlichen" Hybridantriebsstrang vorgesehen ist, also für eine Verbrennungskraftmaschine, die direkt oder über ein Getriebe mit einer elektrischen Maschine gekoppelt ist. Über die konkrete Ausgestaltung der elektrischen Maschine sowie über eine Anwendung einer rekuperationsfähigen Antriebsvorrichtung an Anhängerachsen oder an nicht von einer Verbrennungskraftmaschine angetriebenen Achsen am Fahrzeug ist in der DE 10 2011 118 543 A1 nichts angegeben.

Ferner ist vorstellbar, dass durch eine solche rekuperationsfähige Antriebsvorrichtung für Fahrzeuge das Anhängerfahrzeug einen eigenen Antrieb erhält, so dass das Anhängerfahrzeug auch ohne Motorwagen bzw. Sattelzugmaschine bewegt bzw. rangiert werden kann. Dadurch ergeben sich auf Grund der so gewonnenen mobilen Flexibilität weitere Funktionen für das Anhängerfahrzeug, z.B. als örtlich flexibles bzw. mobiles Lager für just-in-time-Lieferungen mit mehreren Abladestellen an einer Produktionshalle oder beim Stauen des Anhängerfahrzeugs auf Fähren oder beim Beladen von Eisenbahnwagen mit dem Anhängerfahrzeug oder beim Rangieren bzw. Anfahren an Laderampen.

So ist in der DE 10 2008 001 565 A1 ein Anhänger mit zumindest einer Achse und einer Sattelkupplung zur Aufnahme eines Sattelaufliegers beschrieben. Ein solcher Anhänger wird in der Fachsprache als "Dolly" bezeichnet.

Zur besseren Rangierbarkeit eines angekuppelten Sattelaufliegers ist vorgesehen, dass der Dolly eine elektrische Maschine umfassend einen Energiespeicher als Antriebsmittel aufweist. Eine Rekuperationsfähigkeit bzw. Einrichtungen bzw. Mittel dazu sind in der DE 10 2008 001 565 A1 nicht beschrieben.

Hierbei wird es als nachteilig angesehen, dass sich ein Sattelanhänger nur in Verbindung mit einem Dolly ohne Zugmaschine rangieren lässt. Ein Dolly findet allerdings bisher nur in Verbindung mit einem so genannten Euro-Kombi-Lastzug nennenswerte Verwendung, wobei ein solcher Euro-Kombi-Lastzug mit einem Dolly aus einem dreiachsigen Motorwagen, dem Dolly und einem herkömmlichen Sattelauflieger aufgebaut ist. Ein solcher Lastzug überschreitet die bisher max. zulässige Länge von Lastzügen in fast allen europäischen Ländern, so dass solche Euro-Kombi-Lastzüge bisher nur in Skandinavien für den Straßenverkehr zugelassen sind, wobei sie z.B. in Deutschland aktuell lediglich auf ausgewählten Strecken mit Sondergenehmigung und mit reduziertem zul. Gesamtgewicht auf 40 t im Testbetrieb fahren dürfen.

Zum Stand der Technik werden ferner die gattungsgemäße WO 2011/163530 A1 und die US 5 763 980 genannt, worin piezoelektrische Nabendirektantriebe für Fahrzeuge offenbart werden, basierend auf einer Verschiebung des Massezentrums eines Rads durch piezoelektrisch verformbare Speichen beziehungsweise einem Ultraschallmotor mit scheibenförmigem Piezovibrator.

Die Erfindung hat daher die Aufgabe, die oben beschriebenen Nachteile zu beheben oder im Wesentlichen zu mindern.

Eine weitere Aufgabe besteht darin, einen verbesserten Motorwagen oder eine verbesserte Sattelzugmaschine bereitzustellen.

Noch weitere Aufgaben bestehen darin, ein Anhängerfahrzeug und einen verbesserten Lastzug anzugeben.

Die vorliegende Erfindung löst diese Aufgabe durch den Gegenstand des Anspruchs 1.

Die weitere Aufgabe wird durch einen Motorwagen oder eine Sattelzugmaschine mit den Merkmalen des Anspruchs 54 gelöst.

Die noch weiteren Aufgaben werden durch ein Anhängerfahrzeug mit den Merkmalen des Anspruchs 56 und durch einen Lastzug mit den Merkmalen des Anspruchs 58 gelöst.

Ein erfindungsgemäßer Motorwagen oder eine Sattelzugmaschine ist so ausgestaltet, dass die Räder der Vorlaufachse und/oder die Räder der Nachlaufachse die erfindungsgemäße Antriebsvorrichtung aufweisen.

Ein erfindungsgemäßes Anhängerfahrzeug ist so ausgerüstet, dass die Räder der Anhängerfahrzeugachsen des Anhängerfahrzeugs die erfindungsgemäße Antriebsvorrichtung aufweisen.

Ein erfindungsgemäßer Lastzug besteht aus dem erfindungsgemäßen Motorwagen oder der erfindungsgemäßen Sattelzugmaschine sowie mindestens einem erfindungsgemäßen Anhängerfahrzeug.

Durch die Erfindung ergibt sich eine erhöhte Gesamtantriebsleistung eines Lastzuges, die sich insbesondere auf Steigungsstrecken und bei erforderlicher erhöhter Beschleunigung vorteilhaft auswirkt. Darüber hinaus ist in vorteilhafter Weise auch ein Fahren mit rein elektrischem Antrieb durch die Antriebsvorrichtung möglich, um z.B. in Umweltzonen in Innenstädten fahren zu können.

Vorteilhaft wirkt sich die erfindungsgemäße Antriebsvorrichtung auch durch die verbesserte Traktion eines Lastzuges aus, bei dem die Räder der Achsen des mindestens einen Anhängerfahrzeugs und /oder die Vorlaufachse und/oder die Nachlaufachse des Motorwagens bzw. der Sattelzugmaschine jeweils mit einer Antriebsvorrichtung ausgestattet sind. Dadurch kann eine Anfahrhilfe realisiert werden, die sich insbesondere im Winter vorteilhaft auf die Verfügbarkeit und auf die Fahrsicherheit eines solchen Lastzuges auswirkt.

Darüber hinaus kann durch die erfindungsgemäße Antriebsvorrichtung in vorteilhafter Weise eine Rangiermöglichkeit des Anhängers ohne Zugfahrzeug realisiert werden. Bei einem Sattelauflieger ist dies insbesondere mit einer Stützwinde möglich, die an ihrem freien Ende Räder aufweist. Durch die durch die Ausstattung der Räder der Anhängerachsen mit der Antriebsvorrichtung ist der Anhänger bzw. der Sattelauflieger automobil und kann deshalb bei entsprechender Fernsteuerung ohne Zugfahrzeug Laderampen anfahren.

Darüber hinaus kann mit der erfindungsgemäßen Antriebsvorrichtung ein rekuperatives Bremsen realisiert werden. Dabei ist die Verzahnung der Taumelscheibe durch eine Freischaltfunktion im Eingriff.

In Verbindung mit einem elektrischen Energiespeicher, der im Anhängerfahrzeug und/oder im Motorwagen bzw. in der Sattelzugmaschine angeordnet ist, kann die kinetische Energie des Fahrzeugs bzw. des Lastzugs über die Räder bei Bremsvorgängen und im Schubbetrieb des Lastzuges durch die erfindungsgemäße Antriebsvorrichtung in vorteilhafter Weise zurückgewonnen und gespeichert werden.

Vorteilhaft wirkt sich eine solche Funktion auch durch die Erhöhung der Gesamtbremsleistung des Lastzuges aus. Darüber hinaus steht durch die Antriebsvorrichtung eine vorteilhafte, verschleißfreie Dauerbremse zur Verfügung, die u.U. einen Retarder überflüssig macht.

Darüber hinaus kann in vorteilhafter Weise durch eine solche Funktion verhindert werden, dass das Anhängerfahrzeug auf den Motorwagen bzw. auf die Sattelzugmaschine aufläuft.

Ebenfalls kann mit der erfindungsgemäßen Antriebsvorrichtung ein radselektiver Antriebseingriff oder Verzögerungseingriff realisiert werden. Dabei ist die Verzahnung der Taumelscheibe der Antriebsvorrichtung(en) durch die Freischaltfunktion im Eingriff, über die der radselektive Antriebseingriff oder Verzögerungseingriff realisiert werden kann.

Durch eine solche Funktion ergeben sich in vorteilhafter Weise erweiterte Möglichkeiten für eine Fahrstabilitätsregelung für den gesamten Lastzug, wie z.B. für ein elektronisches Stabilitätsprogramm (ESP), das auch den Anhängerfahrzeugbetrieb berücksichtigt.

Darüber hinaus ergeben sich Möglichkeiten zu Verkleinerung des Wendekreises des Lastzuges, was sich vorteilhaft beim Durchfahren von Kreisverkehren auswirkt, insbesondere dann, wenn sich durch Teilbe- bzw. -entladung des Lastzuges der Gesamtfahrzeugschwerpunkt verschoben hat und demzufolge auch das Durchfahren eines Kreisverkehrs mit so genannten BO-Kraftkreisabmessungen mit Schwierigkeiten verbunden ist.

Schließlich kann mit der erfindungsgemäßen Antriebsvorrichtung die Taumelscheibe durch die Freischaltfunktion außer Eingriff gebracht und somit eine Freilauffunktion der Antriebsvorrichtung realisiert werden. Dadurch kann während längerer Phasen ohne nennenswerten Bremseingriffe oder ohne Situationen, in denen eine zusätzliche Antriebsenergie benötigt oder vorteilhaft eingesetzt werden kann, die Antriebsvorrichtung vor übermäßigem Verschleiß geschützt werden. Solche Fahrzustände ergeben sich zum Beispiel bei Autobahnfahrten auf Strecken ohne starke Steigungen oder starkes Gefälle.

Vorteilhaft wirkt sich dabei aus, dass durch eine solche Funktion ein zusätzlicher Fahrwiderstand, wie er durch die im Eingriff befindliche Verzahnung der Taumelscheibe hervorgerufen würde, nicht gegeben ist.

Es stützen sich die Aktuatoren an einem Boden eines Aktuatorengehäuses ab. Vorzugsweise weist die Taumelscheibe eine kegelradförmige Geometrie auf und ist mit einer Verzahnung versehen. Der Wirkdurchmesser der Aktuatoren, die direkt auf die Taumelscheibe wirken, wird vorteilhafterweise so gewählt, dass er um den Faktor bis 5, vorzugsweise um den Faktor 2,5 bis 3,5 kleiner ist als der Teilkreisdurchmesser der Taumelscheibenverzahnung.

In einer weiteren vorteilhaften Ausführungsvariante der Antriebsvorrichtung ist die Verzahnung der Taumelscheibe bzw. die Verzahnung der Antriebscheibe so gestaltet, dass die Verzahnung der Antriebsscheibe einen Zahn weniger aufweist als die Verzahnung der Taumelscheibe. Dadurch ergibt sich eine starke Untersetzung.

Vorteilhafterweise wird der Verzahnungshub der Taumelscheibe so gewählt, dass sich durch den Verzahnungshub eine Differenz des Umfangsbetrags zwischen der ausgelenkten Taumelscheibe und der Taumelscheibe in Ruhestellung ergibt, die einer Zahnteilung entspricht.

Es weisen die wenigstens drei Aktuatoren jeweils ein Gehäuse auf. Damit ist ein einfacher Aufbau und gleichzeitiger Schutz der Aktoren möglich.

Es ist vorgesehen, dass das Gehäuse in radialer Umfangsrichtung Schlitze aufweist. Dadurch kann das Gehäuse einerseits leichter und andererseits elastischer sein. Darüber hinaus wird ein Aktuator durch das Gehäuse vorteilhaft elastisch vorgespannt.

In einer Ausführung weist die Antriebsvorrichtung zwei Gruppen von Aktuatoren mit jeweils wenigstens drei Aktuatoren auf. Hierbei ist vorgesehen, dass die Aktuatoren der ersten Gruppe eine gegenläufige Wirkrichtung zur zweiten Gruppe der Aktuatoren aufweisen. Auf diese Weise kann der zur Verfügung stehende Bauraum in einer Radnabe vorteilhaft ausgenutzt werden.

Weiterhin ist vorgesehen, dass die wenigstens drei Aktuatoren der ersten Gruppe in einer 120 °-Teilung angeordnet sind und die Aktuatoren der zweiten Gruppe, die ebenfalls in einer 120°-Teilung angeordnet sind, um 60° zu den Aktuatoren der ersten Gruppe verschoben sind. Dies ergibt eine möglichst gleichmäßige Aufteilung zur Krafteinleitung.

Für eine weitere Ausführung ist es vorteilhaft, dass die zwei Gruppen von Aktuatoren mit jeweils wenigstens drei Aktuatoren in einem Aktuatorengehäuse eingesetzt sind, da sich so ein kompakter Aufbau ergibt.

Zudem weist das Aktuatorengehäuse in einer weiteren Ausführung an seiner Außenwand Mittel zur Wärmeabfuhr, wie z.B. Kühlrippen, auf. So kann eine effektive Wärmeableitung an der Quelle erfolgen.

Das Aktuatorengehäuse umschließt die Aktuatoren jeweils gehäuseartig radial und an jeweils an einem Ende der Aktuatoren axial. Eine solche Bauweise erleichtert einen Zusammenbau.

In einer weiteren Ausführung ist das Aktuatorengehäuse von einer Tragsäule durchgriffen. Weiterhin ist die Tragsäule von einer Zentralschraube durchgriffen. Dies ergibt einen kompakten Aufbau

Für eine weitere Ausführung weist die Zentralschraube ein Kopfteil auf. Auch das trägt zu einem kompakten und einfachen Zusammenbau bei.

Die Zentralschraube weist einen Schaft, einen Gewindeabschnitt sowie eine Durchgangsbohrung auf. Auf diese Weise ist es möglich, dass die aktuatorkraftführenden Bauteile durch die Zentralschraube mit einer Vorspannung beaufschlagbar sind. Dies ist vorteilhaft, da die Vorspannung durch den Aufbau zentral erfolgen kann.

Die Tragsäule kann aus einem technischen Keramikwerkstoff hergestellt sein. Beispielsweise ist die Tragsäule aus Siliziumkarbid hergestellt. Dies ergibt eine besonders robuste und starre Ausführung.

Die Zentralschraube kann aus einem Vergütungsstahl der Qualität 10.9 oder 12.9 hergestellt sein. Damit sind geringe Toleranzen erzielbar.

Ebenfalls ist es vorteilhaft, wenn das Aktuatorengehäuse aus einem Werkstoff mit geringer Dichte und hohem E-Modul hergestellt ist. So kann das Aktuatorengehäuse z.B. aus einem technischen Keramikwerkstoff hergestellt sein. Vorzugsweise kann das Aktuatorengehäuse auch aus Siliziumkarbid (SiC) hergestellt sein.

In einer Ausführung wirken die Aktuatoren der ersten Gruppe unmittelbar und die Aktuatoren der zweiten Gruppe mittelbar auf die Taumelscheibe. Die Einwirkung kann periodisch sein. Es ist auch möglich, dass die Aktuatoren periodisch nach einer um 120° phasenversetzen Sinusfunktion auf die Taumelscheibe wirken.

In einer weiteren Ausführung können die Aktuatoren der zweiten Gruppe unmittelbar und die Aktuatoren der ersten Gruppe mittelbar auf das Kopfteil der Zentralschraube wirken. Auch diese Einwirkung kann periodisch sein bzw. periodisch nach einer um 120° phasenversetzen Sinusfunktion erfolgen.

In noch einer weiteren Ausführung ist es vorgesehen, dass die Aktuatoren der zweiten Gruppe in Bezug auf die Phasenlage der Ansteuerung der Aktuatoren der ersten Gruppe so angesteuert werden, dass sich eine maximale Überlagerung der Hübe der Aktuatoren ergibt. Es ist auch möglich, dass die Aktuatoren der zweiten Gruppe in Bezug auf die Phasenlage der Ansteuerung der Aktuatoren der ersten Gruppe so angesteuert werden, dass sich eine maximale Kraftwirkung der Aktuatoren auf die Taumelscheibe ergibt. Auf diese Weise ist eine wirkungsvolle Einwirkung der Aktuatoren auf die Taumelscheibe und zum Antrieb ermöglicht.

Die Taumelscheibe kann eine Stirnverzahnung aufweisen. Natürlich sind auch andere Verzahnungsarten möglich.

In einer anderen Ausführung ist die Taumelscheibe als Verbundbauteil gestaltet. Hierbei kann die Taumelscheibe einen Taumelscheibenkörper aufweisen, der aus glasfaserverstärkten Kunststoff (GFK) hergestellt ist. So ist eine hohe Festigkeit erzielbar bei gleichzeitigem geringen Gewicht.

In einer noch weiteren Ausführung können die Verzahnung der Taumelscheibe und die Verzahnung der Antriebsscheibe vorzugsweise einen Modul von 0,25 bis 0,7; besonders bevorzugt einen Modul von 0,35 bis 0,5 aufweisen. Damit ist eine effiziente Leistungs- und Bewegungsübertragung möglich.

In einer weiteren Ausführung weist die Antriebsvorrichtung eine Ankerplatte auf. Die Ankerplatte kann mit einer Stirnverzahnung versehen sein. Die Stirnverzahnung der Taumelscheibe korrespondiert mit der Stirnverzahnung der Ankerplatte geometrisch. So kann die Ankerplatte für die Taumelscheibe eine feststehende Basis bilden, wobei die in Eingriff stehenden Verzahnungen eine bestimmte relative Beweglichkeit der Taumelscheiben zu der feststehenden Ankerplatte in einfacher Weise ermöglichen.

In einer noch weiteren Ausführung weist die Antriebsvorrichtung zwischen der Taumelscheibe und der Antriebsscheibe ein Schwenklager auf. Hierbei ist es vorteilhaft, wenn das Schwenklager einen Wälzkontakt aufweist. Damit wird eine Reibung verringert.

In einer noch weiteren Ausführung ist der Wälzkontakt durch ein Bauteil mit kugelsektorförmiger Geometrie, das in eine gestufte Bohrung der Taumelscheibe eingesetzt ist, und einer kugelsektorförmigen Vertiefung der Antriebsscheibe, zwischen denen ein Lagerkäfig angeordnet ist, in dem Wälzlagerkugeln gehalten sind, gebildet. Dies ergibt einen kompakten Aufbau.

In einer Ausführung erfolgt eine Übertragung eines Drehmoments zwischen der Antriebsscheibe und einer Radnabe durch ein freilaufartiges Rollen-Rampen-System. Damit wird ein Freilauf gebildet, der zwei Funktionen, nämlich Antrieb der Radnabe durch die Antriebsscheibe und Antrieb der Antriebsscheibe durch die Radnabe, z.B. bei Rekuperationsbetrieb.

Weiterhin ist ein die Antriebsvorrichtung aufnehmender Teil der Radnabe zur Außenseite hin durch eine Schutzkappe abgedeckt. Die Schutzkappe ist mit einem Radnabengehäuse verbunden. Damit ergibt sich ein raumsparender Aufbau, der gleichzeitig für Kühlung der Antriebsvorrichtung sorgt, da die Schutzkappe mit dieser im seitlichen Fahrtwind des Fahrzeugs liegt.

In einer noch weiteren Ausführung ist vorgesehen, dass die zwischen dem Grund der gestuften Bohrung der Taumelscheibe und dem Bauteil mit kugelsektorförmiger Geometrie ein Federelement aufweist. Das Federelement kann z.B. eine Tellerfeder sein, wodurch sich ein raumsparender Aufbau ergibt.

In einer Ausführung stützt sich die Tellerfeder auf dem Grund der gestuften Bohrung der Taumelscheibe ab und wirkt mit ihrer Federkraft gegen das Bauteil mit kugelsektorförmiger Geometrie. Damit werden eindeutige Zustände in unterschiedlichen Betriebszuständen der Antriebsvorrichtung ermöglicht.

Hierbei kann die Antriebsvorrichtung zwischen dem Bauteil mit kugelsektorförmiger Geometrie und der Tellerfeder einen Ring aufweisen.

Wenn die Schutzkappe Öffnungen aufweist, ist eine einfache, erzwungene Luftströmung zur Kühlung der Antriebsvorrichtung bei fahrendem Fahrzeug möglich.

Für eine vorteilhaft einfache Dichtung kann die Antriebsvorrichtung in einer Variante eine das Kopfteil umschließende Dichtung aufweisen, die am Aktuatorengehäuse befestigt ist.

Es ist auch möglich, dass die Antriebsvorrichtung eine scheibenförmige Dichtung aufweist, die das Aktuatorengehäuse auf seiner taumelscheibenzugewandten Seite sowie ein Taumelscheibengetriebe, das aus der Taumelscheibe und der Antriebsscheibe gebildet wird, sowie Lagerstellen gegen die Umgebung abdichtet.

Die scheibenförmige Dichtung weist an ihrem radnabenseitigen Umfang einen Dichtungswulst auf, über den die Dichtung zwischen der Radnabe und der Schutzkappe festgelegt ist. Ferner kann die scheibenförmige Dichtung an ihrem aktuatorengehäuseseitigen Umfang einen Dichtungswulst aufweisen, über den die Dichtung zwischen dem Aktuatorengehäuse und der Taumelscheibe festgelegt ist. Damit ist ein einfacher Einbau möglich.

In einer anderen Ausführung sind durch die Freischaltfunktion die Funktionen Antrieb, rekuperatives Bremsen und Freilauf der Antriebsvorrichtung realisiert. Dazu kann die Antriebsvorrichtung eine Stufenschaltfunktion aufweisen. Die Stufenschaltfunktion wirkt auf das Taumelscheibengetriebe, wobei das Taumelscheibengetriebe aus einer Taumelscheibe und einer Antriebsscheibe gebildet ist, und wenigstens zwei Übersetzungsstufen des Taumelscheibengetriebes realisiert. Damit kann die Antriebsvorrichtung in vorteilhafter Weise drei Funktionen aufweisen.

Der Motorwagen oder/und die Sattelzugmaschine können einen Energiespeicher aufweisen, in dem die durch das rekuperative Bremsen mit der Antriebsvorrichtung gewonnene Energie gespeichert wird und aus dem gespeicherte Energie für einen Antrieb des Motorwagens oder der Sattelzugmaschine mit der Antriebsvorrichtung abgegeben wird. Dieser Speicher kann z.B. eine Fahrzeugbatterie oder/und eine zusätzliche Batterie/Akkumulator sein. Natürlich kann auch das Anhängerfahrzeug einen Energiespeicher aufweisen, in dem die durch das rekuperative Bremsen mit der Antriebsvorrichtung gewonnene Energie gespeichert wird und aus dem gespeicherte Energie für den Antrieb des Anhängerfahrzeugs mit der Antriebsvorrichtung abgegeben wird.

Weitere vorteilhafte Ausführungen der Erfindung sind den Unteransprüchen zu entnehmen.

Ausführungsbeispiele des erfindungsgemäßen Gegenstandes sind in den Zeichnungen dargestellt und werden im Folgenden näher beschrieben. Es zeigen:

Figur 1: eine Längsschnittansicht eines Ausführungsbeispiels einer erfindungsgemäßen Antriebsvorrichtung;

Figur 2: eine korrespondierende Vorderansicht der erfindungsgemäßen Antriebsvorrichtung nach Fig. 1;

Figur 3: eine Längsschnittansicht einer Ausführungsvariante einer erfindungsgemäßen Antriebsvorrichtung;

Figur 4: eine korrespondierende Vorderansicht der Ausführungsvariante nach Fig. 3;

Figur 5: eine Längsschnittansicht einer weiteren Ausführungsvariante einer erfindungsgemäßen Antriebsvorrichtung;

Figur 6: eine korrespondierende Vorderansicht der weiteren Ausführungsvariante nach Fig. 5;

Figur 7: eine Ausschnittsvergrößerung der Längsschnittansichten im Schnitt nach Fig. 3 und 5;

Figur 8: ein Kinematik-Diagramm des Ausführungsbeispiels der erfindungsgemäßen Antriebsvorrichtung;

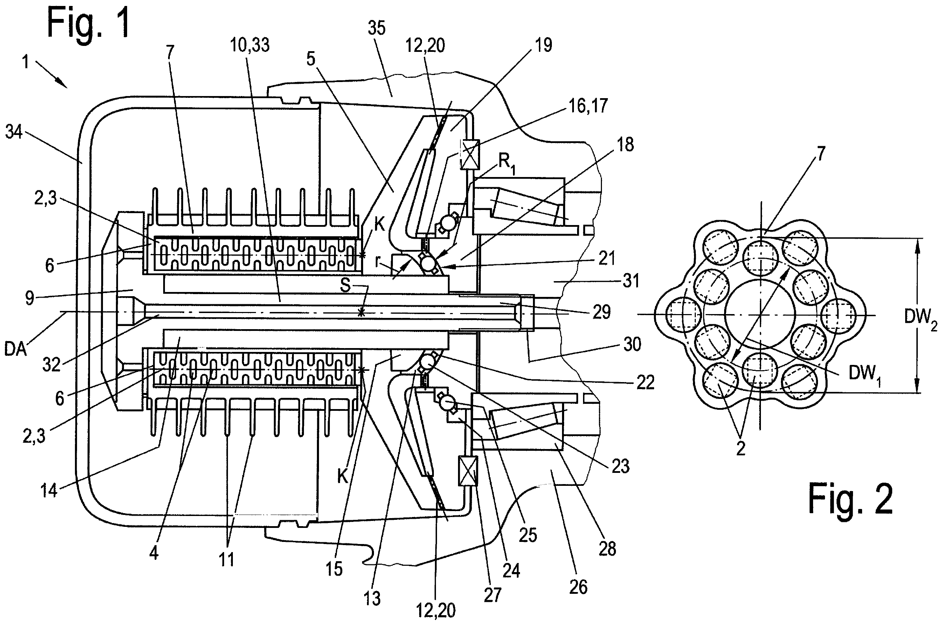

In Fig. 1 ist eine Längsschnittansicht eines Ausführungsbeispiels einer erfindungsgemäßen Antriebsvorrichtung dargestellt. Fig. 2 zeigt eine korrespondierende Vorderansicht der erfindungsgemäßen Antriebsvorrichtung 1 nach Fig. 1.

Die erfindungsgemäße Antriebsvorrichtung 1 ist zur Erzeugung einer Drehbewegung vorgesehen und rekuperationsfähig ausgelegt und weist hier insgesamt zwölf Aktuatoren 2 auf, die hier in zwei Gruppen zu je sechs Aktuatoren 2 angeordnet sind. Jede Gruppe ist auf einem Teilkreis mit unterschiedlichem Durchmesser $DW_1$, $DW_2$ konzentrisch um eine Drehachse DA, jeweils in einer Teilung von 60° angeordnet. Die Durchmesser $DW_1$, $DW_2$ werden im Weiteren auch als Wirkdurchmesser bezeichnet. Dabei erstrecken sich die Aktuatoren 2 im Wesentlichen parallel zueinander und zu der Drehachse DA. Die Anzahl von zwölf Aktuatoren 2 ist rein beispielhaft zu verstehen, d.h., eine erfindungsgemäße Antriebsvorrichtung 1 kann auch weniger oder mehr als zwölf Aktuatoren 2 aufweisen bzw. mehr oder weniger als zwei Teilkreise aufweisen. Je Teilkreis sind jedoch mindestens drei Aktuatoren 2 erforderlich. In Fig. 1 sind die Aktuatoren 2 als Piezoaktuatoren ausgeführt.

Ein Aktuator 2 weist ein oder mehrere, hier -rein beispielhaft- vier Piezostapel (hier nicht dargestellt) auf, die jeweils in einem zylindrischen Gehäuse 3 angeordnet sind. Unter einem Piezostapel ist eine Anzahl von Piezoelementen zu verstehen, welche in einem Stapel angeordnet sind. Alternativ sind auch weniger oder mehr als vier Piezostapel je Aktuator 2 möglich. Das Gehäuse 3 weist orthogonal zur Symmetrieachse ausgerichtete, am Umfang verteilte Schlitze 4 auf, so dass das Gehäuse 3 in axialer Richtung als Feder wirkt.

Die Anzahl der verwendeten Piezostapel je Aktuator 2 und damit auch die Anzahl der insgesamt verwendeten Piezostapel ist abhängig vom gewählten Piezostapel. In dem Ausführungsbeispiel nach Fig. 1 sind pro Gruppe sechs Aktuatoren 2 in der Abmessungen 14 x 14 x 120 mm verwendet, wobei jeder Aktuator 2 aus jeweils vier, demnach in Reihe geschalteten Piezostapel 14 x 14 x 30 mm aufgebaut ist. Alternativ können pro Gruppe auch zwölf Aktuatoren 10 x 10 x 120 mm verwendet werden, wobei dann jeder Aktuator 2 aus jeweils vier, demnach in Reihe geschalteten Piezoelementen 10 x 10 x 30 mm aufgebaut ist. Beide Auslegungen erzeugen die gleiche Kraft und den gleichen Hub. Bei sechs Aktuatoren 2 je Gruppe können diese auch paarweise und bei zwölf Aktuatoren 2 je Gruppe auch in Dreiergruppen angesteuert werden. Eine Einzelansteuerung ist jedoch auch möglich.

Im Folgenden soll das Arbeitsvermögen pro Umdrehung $W_{UG}$ der Antriebsvorrichtung 1 beispielhaft aufgezeigt und daraus abgeleitet das maximal erzielbare Raddrehmoment $M_{Rt}$ beispielhaft ermittelt werden. Daraus ergibt sich die erforderliche Abmessung der Aktuatoren 2.

Zur Verwendung soll hier -rein beispielhaft- ein handelsübliches Element mit piezoelektrischem Wirkprinzip mit 8000 N Blockkraft und einem max. Leerhub (inkl. Vorspannung) von 48 μm bei 28 mm aktiver Länge kommen. Bei einer Reihenschaltung von jeweils vier handelsüblichen Piezoelementen in einem Aktuator 2 ergeben sich für einen solchen Aktuator 2 ein Gesamtarbeitshub von 192 μm und eine theoretische aktive Gesamtlänge von 112 mm.

Das Arbeitsvermögen $W_0$ eines solchen Aktuators 2 pro Hub mit einer nutzbaren Gesamtarbeitslänge von 50% der theoretisch aktiven Gesamtlänge errechnet sich nach:

$$W_0 = 8000 \text{ N} * 0,192 \text{ mm} * 0,5 = 768 \text{ Nmm}$$

Bei zwei mal sechs in Reihe geschalteten Aktuatoren 2 ergibt sich die Gesamtarbeit $W_G$ pro Hub nach:

$$WG = 12 * 768 \text{ Nmm} = 9216 \text{ Nmm} = 9,216 \text{ Nm}$$

Bei der Annahme von 160 Zähnen an der Antriebsscheibe 12 ergibt sich ein Arbeitsvermögen pro Umdrehung $W_{UG}$ der Antriebsscheibe 12 von:

$$W_{UG} = 160 * 9,216 \text{ Nm} = 1474,56 \text{ Nm}$$

Mit $W_{UG} = M * 2 * \pi$ ergibt sich ein theoretisches Rad-Drehmoment von:

$$M_{Rt} = W_{UG} / 2 * \pi = 1474,56 / 6,28 = 234,8 \text{ Nm}$$

Unter Berücksichtigung eines Wirkungsgrades von 0,8 beträgt das zu erwartende Raddrehmoment $M_R$:

$$MR = MRt * 0,8 = 234,8 \text{ Nm} * 0,8 = 187,8 \text{ Nm}$$

Eine Erhöhung des Raddrehmomentes erfordert eine weitere Vergrößerung des Querschnitts des Aktuators 2.

Nun kann die zunächst angenommene erforderliche Zähnezahl der Antriebsscheibe 12 nachgerechnet werden, um bei einer Ansteuerfrequenz der Aktuatoren 2 von 1200 Hz eine Raddrehzahl entsprechend einer Fahrgeschwindigkeit von 90 km/h zu erzielen.

Mit einem dynamischen Rad-Rollradius $R_{dyn}$ von 0,529 m ergibt sich für die Fahrgeschwindigkeit v von 90 km/h = 25 m/s eine Drehzahl $f_n$ von:

$$f_n = v / (R_{dyn} * 2 * \pi) = 25 \text{ m/s} / (0,529 \text{ m} * 6,28) = 7,5253 \text{ 1/s} = 451,52 \text{ 1/min}$$

Mit einer max. zulässigen Ansteuerfrequenz $f_{max}$ für die Aktuatoren 2 von 1200 Hz und der für eine max. Fahrzeuggeschwindigkeit von 90 km/h notwendigen Raddrehzahl von $f_n = 7,5253$ 1/s ergibt sich die Zähnezahl $z_{max}$ der Antriebsscheibe 12 wie folgt:

$$z_{max} = f_{max} / f_n = 1200 \text{ Hz} / 7,5253 \text{ 1/s} = 159,462;$$

gewählt: z = 160

Bei einer Einschränkung des Einsatzbereichs der Antriebsvorrichtung 1 auf eine Fahrzeuggeschwindigkeit von z.B. 60 km/h kann die Ansteuerfrequenz $f_A$ der Aktuatoren 2 entsprechend reduziert werden oder das erzielbare Raddrehmoment $M_R$ bei gleich hoher Ansteuerfrequenz $f_{max}$ erhöht werden.

Mit einer gewählten Übersetzung $i_t = 3,2$ zwischen der Antriebsscheibe 12 und der Taumelscheibe 5, dem Aktuatorhub h = 0,192 mm, der Faktor 2, da eine Reihenschaltung von 2 mal 6 Aktuatoren 2 vorliegt, ergibt sich der Verzahnungshub $h_T$ der Taumelscheibe 5 wie folgt:

$$h_T = h * 2 * i_t = 0,192 * 2 * 3,2 = 1,2288 \text{ mm}$$

Für eine Evolventenverzahnung beträgt die Zahnhöhe bestimmt aus Kopfkreisdurchmesser der Verzahnung 8 der Taumelscheibe 5 minus Grundkreisdurchmesser der Verzahnung 8 der Taumelscheibe 5 geteilt durch zwei = 2,167 * Modul m der Verzahnung 8 der Taumelscheibe 5. Damit errechnet sich der Modul m der Verzahnung 8 der Taumelscheibe 5 wie folgt:

$$m = h_T / 2, 167 = 1,2288 \text{ mm} * 2,167 \text{ mm} = 0,568;$$

gewählt: m = 0,5

Damit ergibt sich für die Verzahnung 8 der Taumelscheibe 5 und der Verzahnung 12 der Antriebsscheibe 13 ein Modul m, der in der Vorzugsreihe der DIN 780 genormt ist und mit üblichen Fertigungsmitteln realisierbar ist.

Mit einer Erhöhung des Aktuatorhubes h kann der Modul m der Verzahnungen 8 bzw. 12 ggf. noch weiter angehoben werden. Andererseits ist die zu Grunde gelegte Taumelscheibenübersetzung von $i_t$ = 3,2 bei dem sich auf Grund des geringen Moduls m ergebenen Durchmesser der Taumelscheibes 5 schwer zu realisieren. Bei weiter reduzierten Modul m erhöhen sich dementsprechend die Schwierigkeiten eine solche Übersetzung "$i_t$" bei möglichst kleinem Bauraum zu realisieren.

Die Aktuatoren 2 der ersten Gruppe, die in der Fig. 1 radial innenliegend angeordnet ist, wirken auf den Wirkdurchmesser $DW_1$ unmittelbar auf eine Taumelscheibe 5, während ihre Reaktionskräfte an eine rückwärtige Stirnwand 6 eines Aktuatorengehäuses 7 abgeleitet werden. Die Aktuatoren 2 der zweiten Gruppe, die in der Fig. 1 radial außenliegend angeordnet ist, stützen sich an einer vorderen Stirnwand 8 (hier nicht dargestellt) des Aktuatorengehäuses 7 ab und wirken auf den Wirkdurchmesser $DW_2$ auf ein Kopfteil 9 einer Zentralschraube 10.

Die Aktuatoren 2 erzeugen bei periodischer, vorzugsweise periodisch nach einer um jeweils 120° phasenversetzen Sinusfunktion erfolgenden Ansteuerung eine Taumelbewegung der Taumelscheibe 5.

Das Aktuatorengehäuse 7 ist geometrisch so gestaltet, dass eine Anordnung der zwei in Reihe geschalteten Gruppen der Aktuatoren 2 ermöglicht wird. Darüber hinaus ist das Aktuatorengehäuse 7 geometrisch so gestaltet, dass ein geringes Gewicht erzielt wird.

Die Aktuatoren 2 sind jeweils durch das Gehäuse 3 vorgespannt. Die Vorspannung der Aktuatoren 2 ist erforderlich, damit die Piezostapel vor äußeren mechanischen Einwirkungen geschützt sind. Die unter Vorspannung bzw. unter Druckspannung stehenden Piezostapel sind so weniger empfindlich gegen äußere Einflüsse wie Stöße, Schwingungsbelastung wechselnde Umgebungstemperaturen und hochfrequente Störungen.

Durch die Vorspannung der Aktuatoren 2 wird jegliches Spiel beseitigt. Es treten somit keine Hubverluste durch unnötiges Spiel auf, jedoch führt auch die Vorspannung auf Grund der daraus resultierenden Einfederung der Piezostapel zu einer Reduzierung des nutzbaren Hubes.

Insofern reduziert sich beispielsweise die Länge eines nicht vorgespannten Aktuators 2 mit den Abmessungen 14 x 14 x 120 mm auf z.B. 112 mm Länge, wenn jedes Piezoelement mit den Abmessungen 14 x 14 x 30 mm um jeweils 2 mm vorgespannt wird. Der mögliche Arbeitshub des Aktuators 2 reduziert sich dementsprechend von auf 48 $\mu$m, so dass als Gesamtarbeitshub des vorgespannten Aktuators 192 $\mu$m bzw. 0,192 mm verbleiben.

Da beim Betrieb der Aktuatoren 2 mit einer erheblichen Wärmeentwicklung zu rechnen ist, weist das Aktuatorengehäuse 7 Mittel zur verbesserten Wärmeabfuhr, wie z.B. Kühlrippen 11 auf.

Das Aktuatorengehäuse 7 ist vorzugsweise aus einem Werkstoff mit einem hohen E-Modul hergestellt, um Hubverluste der Aktuatoren 2 auf Grund von elastischer Verformung angrenzender, aktuatorkraftführender Bauteile -wie z.B. das Aktuatorengehäuse 7- zu minimieren. In Frage kommende Werkstoffe sind zum Beispiel technische Keramikwerkstoffe, wie beispielsweise Siliziumkarbid (SiC) mit einem E-Modul von ca. 400.000 N/mm². Da technische Keramikwerkstoffe, wie beispielsweise SiC, darüber hinaus auch eine relativ hohe Wärmeleitfähigkeit und eine relativ geringe Wärmeausdehnung aufweisen, ist diese Gruppe von Werkstoffen für die Gestaltung des Aktuatorengehäuses 7 bevorzugt.

Da das Aktuatorengehäuse 7 in hochfrequente Bewegungen versetzt wird, ist neben der gewichtssparenden geometrischen Gestaltung auch das spezifische Gewicht des Gehäusewerkstoffs zur Reduzierung von Massenträgheitseinflüssen auf die dynamischen Eigenschaften der Antriebsvorrichtung 1 von Bedeutung. Aus diesem Grund und auch zur Reduzierung der Herstellkosten bietet sich für das Aktuatorengehäuse 7 die Gestaltung als Verbundbauteil an. Hierbei wird das eigentliche Gehäuseteil wie vorgesehen aus einem keramischen Werkstoff, wie z.B. SiC hergestellt, die das Gehäuseteil umgebende Mittel zur Wärmeabfuhr, wie z.B. die Kühlrippen 11, aus einem Leichtmetall, wie z.B. einem Aluminiumwerkstoff oder einem Magnesiumwerkstoff. Das Gehäuseteil wird in diesem Fall mit der Leichtmetall-Kühlstruktur durch ein Metall-Spritzgussverfahren zum Aktuatorengehäuse 7 verbunden. Nachfolgende Bearbeitungsvorgänge werden dadurch erheblich vereinfacht.

Die Taumelscheibe 5 weist eine zylindrische Hüllgeometrie auf. Auf der aktuatorabgewandten Seite weist die Taumelscheibe 5 eine rotationssymmetrische, kegelstumpfförmige Mulde auf, auf dessen äußeren Rand sich eine Verzahnung 12 befindet. Die Taumelscheibe 5 ähnelt deshalb einem Glockenrad, wie es z.B. von Kegelradgetrieben bekannt ist.

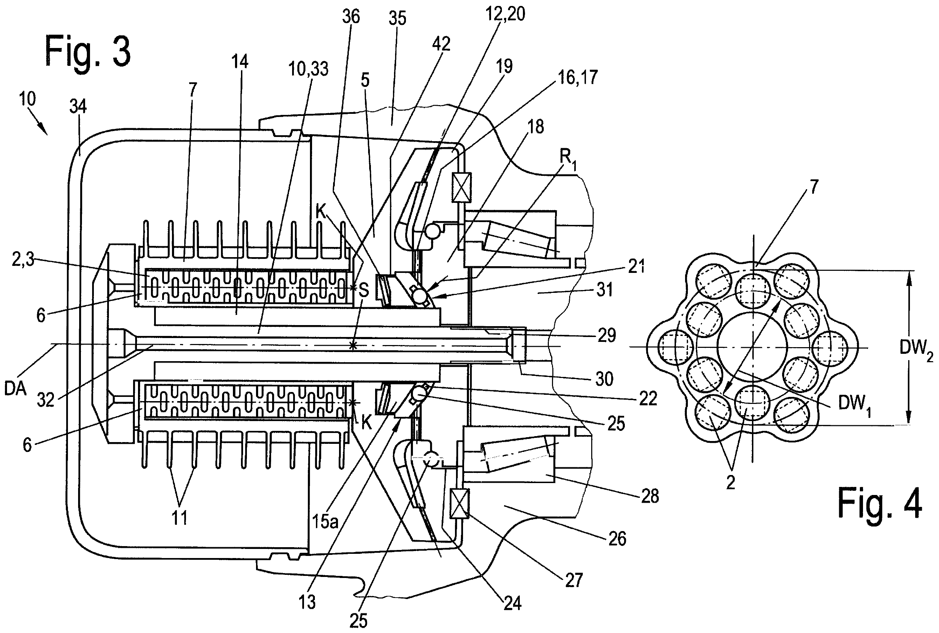

Die Taumelscheibe 5 weist ferner eine zentrische, gestufte Bohrung 13 auf. Die gestufte Bohrung 13 wird an ihrem kleineren Durchmesser von einer zentralen Tragsäule 14 (Fig. 3) durchgriffen, welche wiederum von der Zentralschraube 10 durchgriffen wird, während die Bohrung 13 an ihrem größerem Durchmesser von einem Bauteil 15 durchgriffen wird, das eine kugelsektorförmige Geometrie aufweist, wobei der Kugelsektor einen Radius "r" aufweist.

Die Taumelscheibe 5 weist darüber hinaus eine Stirnverzahnung 16 auf, die mit einer Stirnverzahnung 17 einer Ankerplatte 18 korrespondiert, so dass die Taumelscheibe 5 über die Stirnverzahnung 16, 17 an der ortsfesten Ankerplatte 18 verdrehgesichert ist. Eine taumelartige Bewegung der Taumelscheibe 5 wird jedoch innerhalb der Stirnverzahnungen 16, 17 ermöglicht. Die Stirnverzahnung 16, 17 kann zum Beispiel als Plankerb-Verzahnung bzw. als Hirth-Verzahnung ausgeführt sein.

Die Antriebsvorrichtung 1 weist darüber hinaus eine Antriebsscheibe 19 auf, die koaxial zur Taumelscheibe 5 angeordnet ist, wobei die Antriebsscheibe 19 auf der aktuatorenabgewandten Seite der Taumelscheibe 5 angeordnet ist. Die Antriebsscheibe 19 weist ferner eine zylindrische Hüllgeometrie auf. Auf der aktuatorenzugewandten Seite weist die Antriebsscheibe 19 einen rotationssymmetrischen Kegelstumpf auf, der mit der kegelstumpfförmigen Mulde der Taumelscheibe 5 korrespondiert. Der Außenrand des Kegelstumpfes bzw. der Antriebsscheibe 19 weist eine Verzahnung 20 auf. Die Antriebsscheibe 19 ähnelt also einem Kegelrad, wie es von Kegelradgetrieben bekannt ist. Die Verzahnung 20 greift im Betrieb der Antriebsvorrichtung zumindest abschnittsweise in die korrespondierenden Verzahnung 12 der Taumelscheibe 5 ein.

Die Antriebsscheibe 19 weist ferner eine zentrische, gestufte Bohrung 24 auf, welche die Ankerplatte 18 aufnimmt. Die Ankerplatte 18 weist an ihrer aktuatorenzugewandten Seite eine kugelsektorförmige Vertiefung 21 auf. Die kugelsektorförmige Vertiefung 21 in der Ankerplatte 18 weist einen Radius R1 auf. Die kugelsektorförmige Vertiefung 21 weist einen kugelförmig gewölbten Lagerkäfig 22 auf, in dem Wälzlagerkugeln 23 gehalten sind. Die Wälzlagerkugeln 23 sind dabei ringförmig im Lagerkäfig 22 angeordnet. Optional kann der Lagerkäfig 22 auch eine Wälzlagerkugel 23 in seinem Zentrum aufweisen.

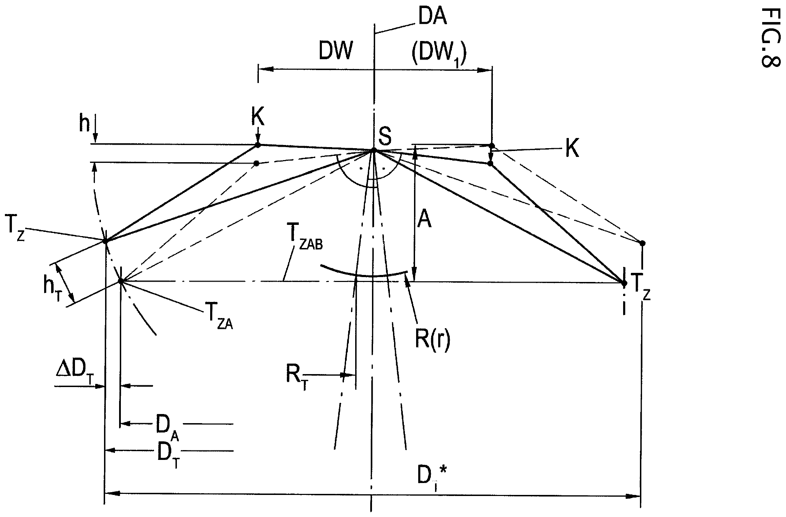

Der Radius R1 in der kugelsektorförmige Vertiefung 21 in der Ankerplatte 18 - subtrahiert um den Durchmesser der Wälzlagerkugel 23- ergibt den kinematisch wirksamen Radius R. Der Radius R ist vom Betrag her gleich dem Radius r am kugelsektorförmigen Bauteil 15. Diese geometrischen Bedingungen sind in Fig. 8 gezeigt.

Die kugelsektorförmigen Geometrieelemente 15, 21 stehen also durch den Lagerkäfig 22 und den Wälzlagerkugeln 23 in einem Wirkzusammenhang, so dass ein Schwenklager bzw. ein Wälzkontakt, im Folgenden Taumellager genannt, gebildet wird. Der Kugelsektor des Bauteils 15 wälzt bei Bewegung der Taumelscheibe 5 entsprechend des Schwenkwinkels der Taumelscheibe 5 auf einem kleinen Wälzkreis ab, den die ringförmig angeordneten Wälzlagerkugeln 23 repräsentieren. Der Mittelpunkt der beiden Radien r und R liegt idealerweise in der gleichen radialen Ebene, wie die Krafteinleitungspunkte K (siehe Fig. 8) der Aktuatoren 2 an der Taumelscheibe 5, so dass eine momentenfreie Krafteinleitung in die Taumelscheibe 5 realisiert wird. Das so gebildete Taumellager umschließt die Tragsäule 14.

Das Bauteil 15 mit kugelsektorförmiger Geometrie ist die Taumelscheibe 5 integriert, während die Ankerplatte 18 mit der kugelsektorförmige Vertiefung 21 in der Antriebsscheibe19 angeordnet ist, um einen einfachen Aufbau und eine unproblematische Krafteinleitung der Aktuatoren 2 auf die Taumelscheibe 5 zu ermöglichen. Durch diese Maßnahme bildet sich das Schwenkzentrum S im Bereich der Taumelscheibe 5 aus und kann in seiner Lage so gewählt werden, dass unerwünschten Querbewegungen am Krafteinleitungspunk K der Aktuatoren 2 in die Taumelscheibe 5 weitgehend vermieden werden (siehe dazu auch Fig. 8).

Ein weiterer Vorteil bei dieser Position des Schwenkzentrums S besteht darin, dass gezielte Querbewegungen im Bereich der Verzahnung 12 der Taumelscheibe 5 erzeugt werden können, da die zugrundeliegende seitliche Schwenkbewegung bei beschriebenen Wahl der Position des Schwenkzentrums S die erforderliche Vergrößerung des Verzahnungsteilkreises gegenüber denjenigen der Abtriebsscheibe 19 um mindestens einen Zahn in der Verzahnung 12, 20 ermöglicht.

Die Taumelscheibe 5 soll zur Minderung der Trägheitskräfte möglichst leicht und andererseits zur Begrenzung der auftretenden Verformungen möglichst steif ausgebildet sein. Da zumindest im Bereich des Taumellagers und ggf. auch in der Verzahnung 12 der Taumelscheibe 5 Stahl erforderlich ist, erscheint ein Verbundbauteil zur Realisierung der genannten Anforderungen geeignet. Im Fall eines Verbundteils aus glasfaserverstärktem Kunststoff (GFK) kann die Verzahnung 12 der Taumelscheibe 5 ggf. in einem geeigneten Kunststoff ausgeführt werden.

Die Verformung der Taumelscheibe 5 wird ebenso wie das Aufbiegen des Kopfteils 9 der Zentralschraube 10 zum Teil selbsttätig kompensiert. Die maximale Kraft und damit die stärkste Verformung tritt in dem Bereich geringer Aktuatorhübe und hoher Aktuatorkräfte auf. Infolge der Verformung wird in einem solchen Arbeitspunkt der Aktuatoren 2 die Spannkraft der Zentralschraube 10 entsprechend der Verformung etwas reduziert. In dieser Phase wird ein Teil der Aktuatorenergie in der elastischen Verformung der kraftaufnehmenden Bauteile 7, 10, 14, 18 gespeichert. Wenn nun im weiteren Durchlauf der "Aktuatorwelle" auf der Taumelscheibe 5 infolge der dann abnehmenden Spannkraft die Rückexpansion der verformten Bauteile 7, 10, 14, 18 eintritt, wird in diesem Bereich die Spannkraft der Zentralschraube 10 und auch der Hub entsprechend vergrößert und somit die gespeicherte Betätigungsenergie freigegeben.

Mit dem Begriff "Aktuatorwelle" ist hier der je Umlauf an einem Ort der der Verzahnung 12 der Taumelscheibe 5 periodisch wiederkehrende, einsetzenden und wieder abnehmenden Eingriff der Verzahnung 12 der Taumelscheibe in die Verzahnung 20 der Antriebsscheibe 19 gemeint.

Die Antriebsscheibe 19 stützt sich auf der Ankerplatte 18 über ein Wälzlager 25 ab. Alternativ ist es auch möglich, dass die Antriebsscheibe 19 unmittelbar mit einer Radnabe 26 verbunden ist. Die Abstützung auf der Ankerplatte 18 ist jedoch erforderlich, damit die aufgrund der geringen Aktuatorhübe notwendigen geringen Abstandstoleranzen der Verzahnungen 12, 20 der Taumelscheibe 5 und Antriebsscheibe 19 eingehalten werden können. Darüber hinaus ist die Antriebsscheibe 19 mit der Radnabe 26 drehmomentübertragend verbunden. Die Übertragung eines Drehmoments zwischen der Antriebsscheibe 19 und der Radnabe 26 erfolgt durch ein freilaufartiges Rollen-Rampen-System 27. Die Radnabe 26 ist gegenüber der Ankerplatte 18 über ein Kegelrollenlager 28 drehbar, die Ankerplatte 18 ist ortsfest und kann sich nicht mitdrehen. Sie bildet mit ihrer Stirnverzahnung 17 und der mit der Stirnverzahnung 17 in Eingriff stehenden Stirnverzahnung 16 der Taumelscheibe 5 deren feste Basis.

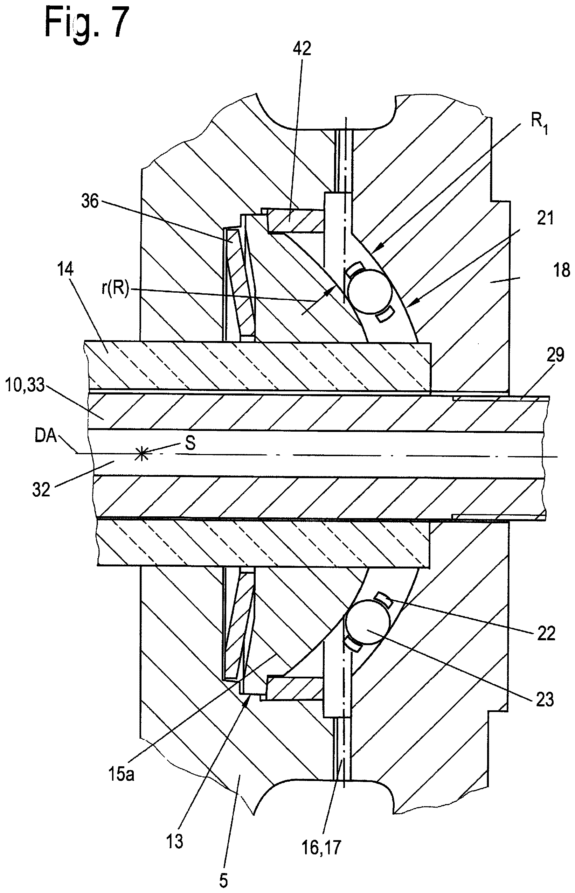

Die Verzahnung 12 der Taumelscheibe 5 und die Verzahnung 20 der Antriebscheibe 19 sind beispielhaft so gestaltet, dass die Verzahnung 13 der Antriebsscheibe 12 einen Zahn weniger als die Verzahnung 8 der Taumelscheibe 5 aufweist. Es ergibt sich so also eine starke Untersetzung. Die kinematischen Zusammenhänge dazu sind in Fig. 7 beispielhaft dargestellt und werden weiter unten erläutert. Bei einem Umlauf der Taumelbewegung der mittels der Stirnverzahnung 16, 17 durch die Ankerplatte 18 gegen Verdrehung gesicherten Taumelscheibe 5 wird die Antriebsscheibe 19 damit um die Taumelscheibe 5 mindestens eine Zahnteilung weiter gedreht.

Bei einer Zähnezahldifferenz von zwei oder drei Zähnen macht der Betrag, um den die Antriebsscheibe 19 weitergedreht wird, entsprechend das Zwei- oder Dreifache einer Zahnteilung aus.

Die ortsfeste Ankerplatte 18 stützt sich auf einem Innenring des Kegelrollenlagers 28 der Radnabe 26 ab. Auf der Ankerplatte 18 stützt sich ferner die Tragsäule 14 ab. Über die Zentralschraube 10, deren Gewindeabschnitt 29 in eine korrespondierende Gewindebohrung 30 eines Achskörpers 31 eingreift, ist der feststehende Teil der Antriebsvorrichtung 1, bestehend aus Ankerplatte 18, Tragsäule 14 und Aktuatorengehäuse 7, durch die Zentralschraube 10 gegen den Innenring des Kegelrollenlagers 28 und damit gegen den feststehenden Achskörper 31 verspannt. Die von der Zentralschraube 10 erzeugte Spannkraft ist so bemessen, dass damit auch die erforderliche Vorspannung des Kegelrollenlagers 28 der Radnabe 26 erzeugt wird.

Die Tragsäule 10 ist vorzugsweise aus einem Werkstoff mit hohem Elastizitätsmodul und hoher Druckfestigkeit hergestellt. Besonders geeignet erscheinen hier Werkstoffe aus der Gruppe der technischen Keramikwerkstoffe, wie z.B. Siliziumkarbid (SiC) mit einem E-Modul von ca. 400.000 N/m$^2$ und einer Druckfestigkeit von ca. 1500 MN/m$^2$.

In Verbindung mit der Zentralschraube 10, die vorteilhafterweise aus einem hochfesten, vergüteten Stahlwerkstoff hergestellt ist und demnach die Qualität 10.9 oder 12.9 aufweist, sowie einer hohen Vorspannkraft der Zentralschraube 10, die auch für eine notwendige Vorspannung der Wälzlager 22, 23, 25, 28 erforderlich ist, lässt sich damit eine geringstmögliche Verformung der aktuatorkraftführenden Bauteile 7, 10, 14, 18 und damit geringstmöglicher Hubverlust der Aktuatoren 2 durch mögliche elastische Bauteilverformung bei der Aktivierung der Aktuatoren 2 erzielen.

Die Zentralschraube 10 weist eine Durchgangsbohrung 32 auf, die eine Kabeldurchführung vom feststehenden Achskörper 31 zu den in dem die Tragsäule 14 umhüllenden Aktuatorengehäuse 7 aufgenommenen Aktuatoren 2 zu deren Spannungsver- bzw. -entsorgung ermöglicht. Das Kopfteil 9 der Zentralschraube 10 nimmt die von den Aktuatoren 2 erzeugte Reaktionskraft auf und leitet die Reaktionskraft in den Schaft 33 der Zentralschraube 10 und schließlich in den Gewindeabschnitt 29 der Zentralschraube 10 und damit an den Achskörper 31 ab. Das Kopfteil 9 ist in Fig. 1 einstückig mit dem Schaft 33 und mit dem Gewindeabschnitt 29 der Zentralschraube 10 ausgebildet. Es ist jedoch auch eine zweiteilige Ausführung denkbar, bei der unter einem Schraubenkopf eine scheibenförmige Abstützplatte angeordnet ist.

Im Folgen wird beispielhaft die Auslegung der Tragsäule 14 und der Zentralschraube 10 im Hinblick auf eine möglichst geringe elastische Verformung der beiden Bauteile unter Last und damit mit geringstmöglichen Hubverlusten für die Aktuatoren dargestellt.

Hubverluste infolge der unter den hohen Aktuatorkräften auftretenden elastischen Verformungen ergeben sich im Wesentlichen

a) durch elastische Längenausdehnung der zentralen Tragsäule 14 und

b) durch elastisches Aufbiegen des Kopfteils 9 der Zentralschraube 10

Für die Tragsäule 14 wird ein Außendurchmesser von 45 mm und ein Innendurchmesser von 16 mm sowie eine Länge von 110 mm vorgewählt. Der E-Modul des gewählten Werkstoffs Siliziumkarbid beträgt 400.000 Nmm$^2$ und

dessen Druckfestigkeit 1200 MNmm². Für die Zentralschraube 10 wird ein Außendurchmesser von 16 mm und ein Innendurchmesser von 6 mm sowie eine Länge von 150 mm vorgewählt. Der E-Modul der gewählten Festigkeitsklasse von 10.9 beträgt 206.000 Nmm².

Zur Ermittlung der erforderlichen Vorspannkraft der vordimensionierten Zentralschraube 10 wird davon ausgegangen, dass die effektiv wirksame Aktuatorkraft 50% der Maximalkraft aller sechs direkt auf die Taumelscheibe 5 wirkenden Aktuatoren 2 beträgt. Da die Krafteinleitung jedoch stark exzentrisch erfolgt und damit eine ungleiche Dehnung der aktuatorkraftaufnehmenden Bauteile 10, 14 hervorruft, wird zur Abschätzung der max. Dehnung mit der vollen Aktuatorenkraft aller sechs Aktuatoren 2 von 48 kN gerechnet.

Die Zentralschraube 10 mit dem Schaftquerschnitt von 126,4 mm² wird auf 800 N/mm² vorgespannt. Mit dieser Vorspannung ergibt sich an der Tragsäule 14 eine Druckspannung von 72,81 N/mm² und mit den oben erwähnten Daten für E Modul und der Länge der Tragsäule 14 eine elastische Stauchung von 0,02 mm.

Aus einem Schraubenvorspanndiagramm, wie es in der einschlägigen Fachliteratur zur Schraubenberechnung auffindbar ist, ergibt sich mit den oben genannten Daten für die Tragsäule 14 und die Zentralschraube 10 unter der maximal Last von 48 kN eine Rückverformung der 0,02 mm gestauchten Tragsäule 14 um 0,01 mm.

Da die tatsächliche Last um den Faktor 2 niedriger liegt, jedoch exzentrisch eingeleitet wird, kann der Hubverlust an der Tragsäule 14 zwischen 0,005 mm und 0,01 mm angenommen werden.

Weitere Hubverluste sind in dem elastischen Aufbiegen des Kopfteils 9 der Zentralschraube 10 und in der Verformung der Taumelscheibe 5 zu erwarten. Das Kopfteil 9 wird zweckmäßig einstückig mit der Zentralschraube 10 ausgeführt, da die Tragsäule 14 auf Grund des gewählten Werkstoffs Siliziumkarbid empfindlich auf Kerb- und Biegebeanspruchung reagiert. Die Aufbiegung des Kopfteils 9 wird nach einer überschlägigen Abschätzung mit 2 μm angenommen.

Insofern lässt sich durch eine entsprechende Werkstoffwahl der aktuatorkraftführenden Bauteile 7, 10, 14, 18 sowie eine entsprechend bemessene Vorspannung der Bauteile 7, 14, 18 durch die Zentralschraube 10 der Hubverlust der Aktuatoren 2 durch elastische Verformung der aktuatorkraftführenden Bauteile 7, 14, 18 minimieren.

Durch die Zusammenfassung aller Bauteile der Antriebsvorrichtung 1 in einer vormontierbaren Einheit ist es möglich, enge Toleranzen durch entsprechende Justiermaßnahmen einzustellen. Bevorzugt wird hierzu in der Zuordnung des der Ankerplatte 18 gegenüberliegenden Bauteils 15, das eine kugelsektorförmige Geometrie aufweist, eingegriffen. Es bietet sich z.B. an, zwischen einer ringförmigen Auflagefläche dieses Bauteils 15 zur Auflagefläche an der Taumelscheibe 5 die notwendigen Verzahnungshubtoleranzen durch das Einfügen von in ihrer Dicke abgestuften Distanzscheiben (hier nicht dargestellt) einzustellen. Eine zweite Möglichkeit besteht darin, das Bauteil 15 in Auswahlreihen mit abgestufter Gesamtdicke auszuführen und zur Einstellung der Toleranzen nach einem Messvorgang dieses Bauteil 15 in passender Gesamtdicke zuzuordnen.

In Fig. 8 ist ein Kinematik-Diagramm eines Ausführungsbeispiels der erfindungsgemäßen Antriebsvorrichtung dargestellt. Ausgehend vom Schwenkzentrum S der Taumelscheibe 5 und einem angenommenen Wirkdurchmesser DW auf dem hier die Aktuatoren 2 der ersten Gruppe im Wesentlichen achsparallel zur Drehachse DA der Antriebsvorrichtung 1 angeordnet sind, erfolgt die Bewegung der Taumelscheibe 5. Der Wirkdurchmesser DW ist dabei um Faktor 1,5 bis 5, vorzugsweise um Faktor 2,5 bis 3,5 kleiner ist als der Teilkreisdurchmesser $D_T$ der Verzahnung 8.

Angenommen wird ein wirksamen Arbeitshub h der Aktuatoren 2 von jeweils 0,080 mm, sowie einen Wirkdurchmesser DW der Aktuatoren 2 von 14 mm, so dass also der Kraftangriffspunkt K der Aktuatoren 2 7 mm vom Schwenkzentrum S der Taumelscheibe 5 beabstandet liegt.

Die Geometrie der Taumelscheibe 5 ist ferner so gestaltet, dass sich bei einem jeweiligen Arbeitshub h der Aktuatoren 2 ein linearisierter Verzahnungshub $h_T$ von 2,7 x h ergibt. Daraus resultiert eine Differenz der Teilkreisdurchmesser von $\Delta D_T$ = 1,25 x h. Bei einem Arbeitshub h der Aktuatoren 2 von 0,080 mm ergibt sich also für $\Delta D_T$ = 0,10 mm und für $h_T$= 0,216 mm.

Mit der Differenz der Teilkreisdurchmesser $\Delta D_T$ = 0,10 mm ergibt sich eine Differenz des Umfangsbetrages $\Delta U_T$ der ausgelenkten Taumelscheibe 5 zur Taumelscheibe 5 in Ruhestellung von $\Delta U_T$ = 0,314 mm. Damit liegt die Teilung für die Bemessung der Verzahnungen 12 und 20 fest, wenn die Verzahnung 13 der Antriebsscheibe 12 einen Zahn weniger als die Verzahnung 12 der Taumelscheibe 5 aufweisen soll.

Wählt man in einem beispielhaften Fall $\Delta U_T$ = 0,30 mm und einen mit üblichen Fertigungsmitteln realisierbaren, sowie in der Vorzugsreihe der DIN 780 genormten Modul m von 0,1, ergibt sich demnach ein verzahnungskinematisch wirksamer Umfang $U_T$ der Taumelscheibe 5 von 98,910 mm und ein verzahnungskinematisch wirksamer Umfang $U_A$ der Antriebsscheibe 12 von 98,596 mm, sowie dementsprechend ein Teilkreisdurchmesser $D_T$ der Taumelscheibe 5 von 31,50 mm und ein Teilkreisdurchmesser $D_A$ der Antriebsscheibe von 31,40 mm. Daraus resultierend, erhält die Taumelscheibe 5 eine Verzahnung 12 mit 315 Zähnen und die Antriebsscheibe 19 eine Verzahnung 20 mit 314 Zähnen. Durch dieses Zähnezahlverhältnis ergibt sich in diesem Fall eine Übersetzung von 315:1.

Der relativ große Verzahnungshub $h_T$ = 0,216 mm am Außenrand der Taumelscheibe 5 führt dazu, dass eine Verzahnung 12 bzw. 20 zur Drehmomentübertragung bzw. - wandlung verwendbar ist, die mit üblichen Fertigungsmitteln realisierbar und damit kostengünstig herstellbar ist.

Mit der vorgenannten Auslegung der Kinematik und der Verzahnung 12 bzw. 20 ergibt sich beispielsweise bei einer Taumelfrequenz von $f_{max} = 640$ 1/s eine maximale Antriebsdrehzahl der Antriebsvorrichtung 1 $n_{max}$ von 120 1/min und ein max. Drehmoment $M_{max}$ von 8 Nm der Antriebsvorrichtung 1. Damit ist die in Fig. 8 beispielhaft kinematisch ausgelegte Antriebsvorrichtung als rekuperationsfähige Antriebsvorrichtung 1 zur Erzeugung einer Drehbewegung in Nutzfahrzeugen einsetzbar.

Der Verzahnungshub $h_T$ sowie damit korrespondierend die Differenz der Teilkreisdurchmesser $\Delta D_T$ ist beeinflussbar durch Änderung des Abstandes A von der Teilkreisebene $T_{ZAB}$ der Antriebsscheibe 19 zum Schwenkzentrum S der Taumelscheibe 5 und ist damit über die geometrische Gestaltung der Taumelscheibe 5 verschiedenen Bauraumgegebenheiten anpassbar.

Mit dem Begriff Teilkreisebene $T_{ZAB}$ ist jene Ebene gemeint, die der Teilkreisdurchmesser $D_A$ der Antriebsscheibe 19 aufspannt.

Der die Antriebsvorrichtung 1 aufnehmende Teil der Radnabe 26 ist zur Außenseite hin durch eine Schutzkappe 34 abgedeckt. Die Schutzkappe 34 ist hier -rein beispielhaft- durch einen Umformprozess form- und kraftschlüssig mit einem Radnabengehäuse 35 verbunden. Der Bauraum der Antriebsvorrichtung 1 inklusive Schutzkappe 34 ist dabei so gewählt, dass er mit einem Außenplanetengetriebe einer angetriebenen Nutzfahrzeug-Starrachse identisch oder zumindest ähnlich groß ist.

Die Antriebsvorrichtung 1 lässt sich dadurch besonders vorteilhaft als Nabendirektantrieb in den freien Raum im Felgenmaul bzw. in den freien Raum der Radschüssel ohne Bauraumprobleme an nichtangetriebene Nutzfahrzeugachsen, insbesondere an Anhängerachsen sowie an Vorlauf- und Nachlaufachsen von Motorwagen bzw. Sattelzugmaschinen montieren, ohne die Fahrzeugbreite zu vergrößern oder die Montage- bzw. Demontage der Räder zu behindern.

Darüber hinaus ist die Masse der erfindungsgemäßen Antriebsvorrichtung 1 mit Aktuatoren, die nach dem piezoelektrischen Wirkprinzip arbeiten und mit einem Taumelscheibengetriebe signifikant geringer als einer elektrischen Maschine gleicher Leistung, die nach dem Drehfeld- bzw. Wanderfeld-Wirkprinzip arbeitet, da die erfindungsgemäße Antriebsvorrichtung 1 keine schweren Spulen zur Erzeugung eines Drehfelds bzw. Wanderfelds benötigt. Dadurch werden die ungefederten Massen eines Nutzfahrzeugs, das mit den erfindungsgemäßen Antriebsvorrichtungen 1 ausgestattet ist, im Vergleich mit elektrischen Maschinen mit einem anderen Wirkprinzip als dem des piezoelektrischen Effekts nur leicht erhöht. Dementsprechend werden die Fahreigenschaften und die Fahrsicherheit eines solchen Nutzfahrzeugs nicht wesentlich eingeschränkt.

Die Antriebsvorrichtung 1 wird zum rekuperativen Bremsen und in speziellen Situationen als Radantrieb benötigt. Im überwiegenden Einsatzzeitraum eines Fahrzeuges soll die Antriebsvorrichtung 1 jedoch freigeschaltet sein, um keine zusätzlichen Schleppmomente oder unnötigen Verscheiß an den Bauteilen der Antriebsvorrichtung 1 hervorzurufen.

Eine Freischaltung bzw. ein Freilauf in nur einer Beanspruchungsrichtung, Bremsen oder Antreiben, könnte selbsttätig z.B. über einen herkömmlichen Freilauf erfolgen, da jedoch beide Beanspruchungsrichtungen aktiv zu- und ausschaltbar sein müssen ist eine Schaltfunktion erforderlich.

Eine solche Freischaltfunktion ist unter bestimmten Voraussetzungen konstruktionsbedingt bei der erfindungsgemäßen Antriebsvorrichtung 1 gegeben, nämlich dann, wenn alle direkt auf die Taumelscheibe 5 wirkenden Aktuatoren 2 in eine Nullhubstellung gebracht werden.

Bei einer Ausführung, bei der auf eine kinematische Huberhöhung (siehe Erläuterung weiter oben zu Fig. 8) durch ein entsprechendes Verhältnis zwischen dem Wirkdurchmesser $DW_1$ der auf die Taumelscheibe 5 wirkenden Aktuatoren 2 und dem Teilkreisdurchmesser $D_T$ der Taumelscheibe, im folgenden "Taumelscheibenübersetzung" $i_T$ genannt, verzichtet wird, die Aktuatoren 2 also direkt über den Teilkreisdurchmesser $D_T$ der Taumelscheibe 5 angeordnet sind, wird die Verzahnung 12 bei Anheben aller Aktuatoren 2, die direkt auf die Taumelscheibe 5 wirken, in eine Nullhubstellung außer Eingriff gebracht. Hierbei wird das Taumellager um den halben Aktuatorhub h abgehoben.

Der Begriff "Nullhubstellung" bedeutet hier, dass in diesem Betriebszustand die Aktuatoren 2 keinen Arbeitshub h aufweisen. Im Gegensatz dazu bedeutet der Begriff "Vollhubstellung", der im Folgenden ebenfalls verwendet wird, dass in diesem Betriebszustand die Aktuatoren ihren vollen Arbeitshub h aufweisen.

Bei Nutzung der Taumelscheibenübersetzung $i_T$, d.h. bei einer Anordnung der Aktuatoren 2, die direkt auf die Taumelscheibe 5 wirken, auf einem Wirkdurchmesser $DW_1$, der um einen Faktor von 1,5 bis 5, vorzugsweise um Faktor 2,5 bis 3,5 kleiner ist als der Teilkreisdurchmesser $D_T$ der Taumelscheibe 5, ist dieser Effekt nicht selbstverständlich gegeben, da aufgrund der Taumelscheibenübersetzung $i_T$ eine größere Zahnüberdeckung vorliegt.

Es lässt sich jedoch ein guter Kompromiss erzielen, wenn bei der Festlegung des Moduls m und damit der Zahnhöhe $h_z$ der Verzahnung 12 der Taumelscheibe 5 die maximal mögliche Taumelscheibenübersetzung $i_T$ nicht vollständig ausgenutzt wird. Es ist dann eine Freischaltung des Taumelscheibengetriebes mit begrenzter Nutzung der Taumelscheibenübersetzung $i_T$ möglich.

Im Folgenden wird eine rein beispielhafte Auslegung eines Taumelscheibengetriebes zur Realisierung der Freischaltfunktion beschrieben. Die Realisierung der Freischaltfunktion erfordert bei einem Aktuatorgesamthub h von beispielsweise 0,36 mm und dem daraus resultierenden Zahnhub $h_T$ von 1,26 mm einen Modul m der Verzahnung 12 der Taumelscheibe 5 von max. 0,35 mm. Bei Verzicht auf die Freischaltfunktion ist ein Modul 0,5 oder 0,6 möglich. Mit dem Modul m mit 0,35 ergibt sich bei vollständigem Zurückziehen aller Aktuatoren 2 ein axialer Luftspalt zwischen der Verzahnung 12 der Taumelscheibe 5 und der Verzahnung 20 der Antriebsscheibe 19 von 0,11 mm. Dieser Luftspalt kann durch Anwendung einer Sonderzahnform (Profilverschiebung etc.) vergrößert werden.

Die Freischaltung ergibt sich, indem alle Aktuatoren 2 in die Nullhubstellung zurückgezogen werden. Bei entsprechender Wahl von:

- Modul m der Verzahnung 12 und 20
- Taumelscheibenübersetzung $i_T$ und
- Hub h der Aktuatoren 2

wird dabei die Paarung der Verzahnungen 12, 20 des Taumelscheibengetriebes vollständig außer Eingriff gebracht. Die Freischaltfunktion weist demnach drei Schaltstellungen auf:

- die Verzahnung 12 der Taumelscheibe 5 befindet sich im Eingriff und die Aktuatoren 2 werden motorisch betrieben
- die Verzahnung 12 der Taumelscheibe 5 befindet sich im Eingriff und die Aktuatoren 2 werden generatorisch betrieben
- die Verzahnung 12 der Taumelscheibe 5 befindet sich nicht im Eingriff

Mit einem so gestalteten Taumelscheibengetriebe ist mit der erfinderischen Antriebsvorrichtung 1 ein Radnabenantrieb möglich, bei dem durch die Freischaltfunktion die Verzahnung 12 der Taumelscheibe 5 im Eingriff ist und die Aktuatoren 2 motorisch betrieben werden.

Dadurch ergibt sich in eine erhöhte Gesamtantriebsleistung eines Lastzuges, die sich insbesondere auf Steigungsstrecken und bei erforderlicher erhöhter Beschleunigung vorteilhaft auswirkt. Darüber hinaus ist in vorteilhafter Weise auch ein Fahren mit rein elektrischem Antrieb durch die Antriebsvorrichtung 1 möglich, um z.B. Umweltzonen von Innenstädten befahren zu können.

Vorteilhaft wirkt sich auch die verbesserte Traktion eines Lastzuges aus, bei dem die Räder der Achsen des mindestens einen Anhängerfahrzeugs und/oder die Vorlaufachse und/oder die Nachlaufachse des Motorwagens bzw. der Sattelzugmaschine jeweils mit einer Antriebsvorrichtung 1 ausgestattet sind. Dadurch kann eine Anfahrhilfe realisiert werden, die sich insbesondere im Winter vorteilhaft auf die Verfügbarkeit und auf die Fahrsicherheit eines solchen Lastzuges auswirkt.

Darüber hinaus kann durch die erfindungsgemäße Antriebsvorrichtung in vorteilhafter Weise eine Rangiermöglichkeit des Anhängers ohne Zugfahrzeug realisiert werden. Bei einem Sattelauflieger ist dies insbesondere z.B. mit einer Stützwinde möglich, die an ihrem freien Ende Räder aufweist. Durch die Ausstattung der Räder der Anhängerachsen mit der Antriebsvorrichtung 1 ist der Anhänger bzw. der Sattelauflieger automobil und kann deshalb ohne Zugfahrzeug Laderampen anfahren, d.h. dazu ferngesteuert werden.

Darüber hinaus kann mit der erfindungsgemäßen Antriebsvorrichtung 1 ein rekuperatives Bremsen realisiert werden. Dabei ist die Verzahnung 12 der Taumelscheibe 5 durch die Freischaltfunktion im Eingriff und die Aktuatoren 2 werden generatorisch betrieben.

In Verbindung mit einem elektrischen Energiespeicher, der im Anhängerfahrzeug und/oder im Motorwagen bzw. in der Sattelzugmaschine angeordnet ist, kann die kinetische Energie des Fahrzeugs über die Räder bei Bremsvorgängen und im Schubbetrieb des Lastzuges durch die erfindungsgemäße Antriebsvorrichtung 1 in vorteilhafter Weise zurückgewonnen und gespeichert werden.

Vorteilhaft wirkt sich eine solche Funktion auch durch die Erhöhung der Gesamtbremsleistung des Lastzuges aus. Darüber hinaus steht durch die Antriebsvorrichtung 1 eine vorteilhafte, verschleißfreie Dauerbremse zur Verfügung, die u.U. einen Retarder überflüssig macht.

Darüber hinaus kann in vorteilhafter Weise durch eine solche Funktion verhindert werden, dass das Anhängerfahrzeug auf den Motorwagen bzw. auf die Sattelzugmaschine aufläuft.

Ebenfalls kann mit der erfindungsgemäßen Antriebsvorrichtung 1 ein radselektiver Antriebseingriff oder Verzögerungseingriff realisiert werden. Dabei ist die Verzahnung 12 der Taumelscheibe 5 der Antriebsvorrichtung(en) 1 durch die Freischaltfunktion im Eingriff, über die der radselektiver Antriebseingriff oder Verzögerungseingriff realisiert werden soll(en). Die Aktuatoren 2 werden je nach gewünschtem Eingriff motorisch oder generatorisch betrieben.

Durch eine solche Funktion ergeben sich in vorteilhafter Weise erweiterte Möglichkeiten für eine Fahrstabilitätsregelung für den gesamten Lastzug, wie z.B. für ein elektronisches Stabilitätsprogramm (ESP) das auch den Anhängerfahrzeugbetrieb berücksichtigt.

Darüber hinaus ergeben sich Möglichkeiten zu Verkleinerung des Wendekreises des Lastzuges, was sich vorteilhaft beim Durchfahren von Kreisverkehren auswirkt, insbesondere dann, wenn sich durch Teilbe- bzw. -entladung des Lastzuges der Gesamtfahrzeugschwerpunkt verschoben hat und demzufolge auch das Durchfahren eines Kreisverkehrs mit BO-Kraftkreisabmessungen mit Schwierigkeiten verbunden ist.

Schließlich kann mit der erfindungsgemäßen Antriebsvorrichtung 1 die Taumelscheibe 5 durch die Freischaltfunktion außer Eingriff gebracht und somit eine Freilauffunktion der Antriebsvorrichtung 1 realisiert werden. Dabei ist die Verzahnung 12 der Taumelscheibe 5 durch die Freischaltfunktion nicht im Eingriff.

Dadurch kann während längerer Phasen ohne nennenswerten Bremseingriffe oder ohne Situationen, in denen eine zusätzliche Antriebsenergie benötigt oder vorteilhaft eingesetzt werden kann, die Antriebsvorrichtung 1 vor übermäßigem Verschleiß geschützt werden. Solche Fahrzustände ergeben sich zum Beispiel bei Autobahnfahrten auf Strecken ohne starke Steigungen oder starkes Gefälle.

Vorteilhaft wirkt sich dabei aus, dass durch eine solche Funktion ein zusätzlicher Fahrwiderstand, wie er durch die im Eingriff befindliche Verzahnung 12 der Taumelscheibe 5 hervorgerufen würde, nicht gegeben ist, wenn die Freilaufschaltung in freigeschalteter Stellung steht.

Eine besonders vorteilhafte Funktion der erfindungsgemäßen Antriebvorrichtung 1 ist das rekuperative Bremsen.

Im Rekuperationsbetrieb der Antriebsvorrichtung 1 werden die Aktuatoren 2 im nicht aktivierten, d.h. nicht verformten Zustand, zusammengedrückt, wodurch eine elektrische Ladung erzeugt wird, die in einen Speicher abgeleitet werden kann. Im Gegensatz dazu werden im Antriebsbetrieb der Antriebsvorrichtung 1 die Aktuatoren 2 im nicht verformten Zustand mit einer elektrischen Spannung beaufschlagt, wodurch sie eine Ladung aufnehmen und infolge dessen eine Verlängerung erfahren.

Ein selbstauslösender Rekuperationsbetrieb ist zumindest aus dem Freischaltzustand der Antriebsvorrichtung 1 heraus nicht möglich. Es ist eine Erkennung des Brems- oder Schubbetrieb-Zustandes des Fahrzeugs bzw. des Lastzugs erforderlich, um dann über die Freischaltfunktion in nicht freigeschalteter Stellung das Eingreifen der Verzahnung 12 der Taumelscheibe 5 über die Aktuatoren 2 auszulösen.

Da nun die Taumelscheibe 5 durch die Antriebsscheibe 19 angetrieben wird und sich damit gegenüber dem Antriebsbetrieb der Antriebsvorrichtung 1 eine Umkehr der Kraftflussrichtung auch zwischen der Antriebsscheibe 19 und der Radnabe 26 ergibt, wird die Antriebsscheibe 19 durch das zwischen Antriebsscheibe 19 und Radnabe 26 wirkende Rollen-Rampen-System 27 gegenüber der Radnabe 26 um ca. den Betrag des maximalen Aktuatorhubes im Sinne einer Vorspannung der Aktuatoren 2 angehoben.

Im weiteren Verlauf ist ein selbsttätiger Rekuperationsbetrieb möglich, jedoch kann es zweckmäßig sein, den Ablauf der Taumelbewegung der Taumelscheibe 5 durch einen Teil der Aktuatoren 2 in einem ggf. zyklischen Eingriff zu stabilisieren.

Darüber hinaus ist es durch eine variable Hubsteuerung der Aktuatoren 2 möglich, in Verbindung mit der glockenförmigen Ausbildung der Taumelscheibe 5 ausschließlich durch entsprechende Hubsteuerung der Aktuatoren 2 eine andere als durch die Verzahnungsparameter vorgegebene Übersetzung des Taumelscheibengetriebes zu realisieren.

Bei der Taumelbewegung der Taumelscheibe 5 im Antriebsbetrieb der Antriebsvorrichtung 1 vollführt die Mittelachse des Teilkreisdurchmessers $D_T$ der Taumelscheibe 5 eine Umlaufbewegung auf einer Kreisbahn. Der Radius $R_T$ dieser Kreisbahn ergibt sich aus:

Aktuatorhub (h) / Abstand der Aktuatoren 2 von der Drehachse DA (DW$_1$/2) * Abstand des Schwenkzentrums S vom Durchstoßpunkt der Zentralachse in der Verzahnungsebene.

Es ergibt sich für den Kreisbahnradius etwa das 1,5 - fache des Aktuatorhubes h.

Der Teilkreis $D_T$ der Taumelscheibe 5 beschreibt somit entsprechend der Exzenterbewegung einen um den oben definierten Kreisbahnradius vergrößerten Hüllkreis und "simuliert" damit einen größeren Teilkreisdurchmesser $D_T{}^*$. Daraus ergibt sich eine geringere Zahnüberdeckung mit der Antriebsscheibe 19.

Dadurch ist es möglich, die Zahnüberdeckung durch Variation des Aktuatorhubes h, d.h. durch eine variable Hubsteuerung, so einzustellen, dass die Taumelscheibe 5 bei einem Umlauf in einer ersten Einstellung der variablen Hubsteuerung nur einen Zahn "überspringt" und bei einer zweiten Einstellung zwei Zähne. Ggf. ist auch eine dritte Übersetzungsstufe realisierbar.

Realistisch erscheint, dass bei beispielsweise 301 Zähnen der Taumelscheibe 5 in der ersten Einstellung ein Übersetzungsverhältnis von 300:1 erzielt wird und in der zweiten Einstellung ein Übersetzungsverhältnis von 150:1. Eine evtl. mögliche dritte Einstellung würde dann ein Übersetzungsverhältnis von 75:1 ergeben.

Die variable Hubsteuerung ist so ausgeführt, dass in allen Hubeinstellungen die Verzahnung 12 der Taumelscheibe 5 und die Verzahnung 20 der Antriebsscheibe 19 in der Eingriffszone eine ausreichende Eingrifftiefe erreichen und auf der gegenüberliegenden Seite die Zähne ausreichend weit außer Eingriff gebracht werden.

Die durch die exzentrische Taumelbewegung der glockenförmigen Taumelscheibe 5 hervorgerufene Vergrößerung des "simulierten" Teilkreisdurchmessers $D_T^*$ gegenüber dem tatsächlichen Teilkreisdurchmesser $D_T$ beträgt -dem obigen Zahlenbeispiel folgend- beispielsweise das 3-fache des Aktuatorhubes h. Bei einem Aktuatorhub von z.B. 0,36 mm und einem gewählten Modul m von z.B. 0,35 ist es also möglich, bei maximalem Aktuatorhub h eine Vergrößerung der Taumelscheibe 5 um bis zu drei Zähnen zu simulieren.

In Fig. 2 ist eine korrespondierende Vorderansicht der erfindungsgemäßen Antriebsvorrichtung 1 nach Fig. 1 dargestellt.

Gut erkennbar ist die zur Anordnung der Aktuatoren 2 in zwei Gruppen, jeweils auf einem Wirkdurchmesser $DW_1$ bzw. $DW_2$. Die Aktuatoren 2 sind je Gruppe hier in einer symmetrischen 60°-Teilung in ihren Längsachsen im Wesentlichen parallel zur Achse der Antriebsvorrichtung 1 angeordnet. Die Aktuatoren 2 der zweiten Aktuatorengruppe sind in Bezug auf den Wirkdurchmesser $DW_2$ bzw. auf den Teilkreis um je 30° verdreht zu den Aktuatoren 2 der ersten Aktuatorengruppe im Aktuatorengehäuse 7 angeordnet. Der Wirkdurchmesser $DW_1$ der Aktuatorenanordnung ist dabei so gewählt, dass der Teilkreisdurchmesser der Verzahnung 8 der Taumelscheibe 5 betragsmäßig unterschritten wird.

Die Funktion der Antriebsvorrichtung 1 wird dadurch gewährleistet, dass die im Wesentlichen parallel zur Achse der Antriebswelle 15 angeordneten hier sechs bzw. zwölf und mindestens drei Aktuatoren 2 an dem Wirkdurchmesser $DW_1$ die gegen Verdrehen gesicherte Taumelscheibe 5 angreifen. Bei periodischer, vorzugsweise periodisch nach einer um jeweils 120° phasenversetzen Sinusfunktion erfolgenden Ansteuerung der Aktuatoren 2 beider Aktuatorengruppen wird durch wechselnde Dilatation und Kontraktion der Aktuatoren 2 eine die Antriebsscheibe 19 in Rotation versetzende Taumelbewegung um das kinematisches Schwenkzentrum S erzeugt. Dies ist auch in Fig. 8 gut erkennbar dargestellt.

In Fig. 3 ist eine Längsschnittansicht einer Ausführungsvariante einer erfindungsgemäßen Antriebsvorrichtung 10 dargestellt. Fig. 4 zeigt eine korrespondierende Vorderansicht der Ausführungsvariante nach Fig. 3.

Um Wiederholungen zu vermeiden, werden im Folgenden nur Abweichungen bzw. Änderungen und Ergänzungen zu der oben beschriebenen Ausführungsvariante einer erfindungsgemäßen Antriebsvorrichtung 1 nach Fig. 1 bzw. Fig. 2 beschrieben.

Abweichend zu der Ausführungsvariante der Antriebsvorrichtung 1 nach Fig. 1 bzw. Fig. 2 weist die Ausführungsvariante der Antriebsvorrichtung 10 nach Fig. 3 zwischen dem Grund der gestuften Bohrung 13 der Taumelscheibe 5 und dem Bauteil 15a mit kugelsektorförmiger Geometrie ein Federelement auf, das hier -rein beispielhaft- als Tellerfeder 36 ausgeführt ist. Die Tellerfeder 36 stützt sich auf dem Grund der gestuften Bohrung 13 der Taumelscheibe 5 ab und wirkt mit ihrer Federkraft gegen das Bauteil 15a mit kugelsektorförmiger Geometrie. Ferner weist Antriebsvorrichtung 10 zwischen dem Bauteil 15a mit kugelsektorförmiger Geometrie und der Tellerfeder 36 einen Ring 42 auf.

Eine Ausschnittsvergrößerung dieses Abschnitts der Antriebsvorrichtung 10 ist in Fig. 7 dargestellt.

Durch die Tellerfeder 36 und dem Ring 42 ist es nicht mehr erforderlich, das Bauteil 15a mit kugelsektorförmiger Geometrie in verschiedene Toleranzklassen zu klassieren oder das Bauteil 15a mit Passscheiben einzubauen, da die Toleranzen in vorteilhafter Weise durch die Tellerfeder 36 kompensiert werden. Dies ermöglicht eine wesentlich vereinfachte und damit kostengünstige Fertigung und Montage des Bauteils 15a mit kugelsektorförmiger Geometrie.

Darüber hinaus unterstützt die Tellerfeder 36 die Realisierung der Freischaltfunktion. Die Realisierung der Freischaltfunktion erfordert bei einem Aktuatorgesamthub h von 0,36 mm und dem daraus resultierenden Zahnhub $h_T$ von 1,26 mm einen Modul m der Verzahnung 12 der Taumelscheibe 5 von max. 0,35. Bei Verzicht auf die Freischaltfunktion ist ein Modul 0,5 oder 0,6 möglich. Mit dem Modul 0,35 ergibt sich bei vollständigem Zurückziehen aller Aktuatoren 2 und der Rückstellung der Taumelscheibe 5 durch die zwischen dem Taumellager und der Taumelscheibe 5 angeordnete Tellerfeder 36 ein axialer Luftspalt zwischen der Verzahnung 12 der Taumelscheibe 5 und der Verzahnung 20 der Antriebscheibe 19 von 0,11 mm. Dieser Luftspalt bzw. Freigang kann durch Anwendung einer Sonderzahnform (Profilverschiebung etc.) für beide Verzahnungen 12, 20 vergrößert werden.

Der im o.g. Beispiel ermittelte Freigang von 0,11 mm ergibt sich wie folgt: Die Überdeckung der Zähne der Verzahnung 12 der Taumelscheibe 5 und der Verzahnung 20 der Antriebscheibe 19 beträgt zweimal Modul m, bei Modul m 0,35 also 0,7 mm.

In der maximalen Schwenkstellung der Taumelscheibe 5 ist die Verzahnung 12 auf einer Seite auf 0,7 mm Überdeckung eingefahren und auf der gegenüberliegenden Seite besteht bei dem maximal Hub von 1,26 mm ein Freigang von 0,56 mm (1,26 minus 0,7). Werden nun die ausgefahrenen Aktuatoren 2 ebenfalls zurückgezogen, schwenkt zwar die stark ausgefahrene Seite zurück, allerdings schwenkt die max. zurückgezogene Seite jedoch im gleichen Maße vor, so dass sich eine Mittelstellung der Taumelscheibe 5 ergeben würde. In dieser Mittelstellung liegt ein Hub von 50 % des Maximalhubes h vor, also 0,63 mm. Diese Mittelstellung entspricht einem Aktuatorhub von 0,18 mm. Tatsächlich sind die Aktuatoren 2 je doch alle um 0,36 mm zurückgefahren. Ohne Tellerfeder 36 würde sich somit ein Spalt von 0,18 mm zwischen den Anlageflächen der Aktuatoren 2 an der Taumelscheibe 5 ergeben. Mit der Kraft der Tellerfeder 36 wird die Taumelscheibe 5 jedoch um diese 0,18 mm zurückbewegt und mit Vorspannung an den Aktuatoren 2 zur Anlage gebracht. Die Gesamte Rückbewegung beträgt nun 0,63 mm + 0,18 mm = 0,81 mm, womit der erwähnte Freigang von 0,11 mm erreicht ist.

Die Rückstellkraft der Tellerfeder 36 wird für die Realisierung der Freigangfunktion nur so hoch gewählt, dass die Gehäuse 3 der Aktuatoren 2 ohne Schlitze 4 und damit ohne Federfunktion ausgeführt entfallen können. Die Vorspannung der Aktuatoren 2 wird mit 5 bis 15 MPa gewählt. Für sechs Aktuatoren 2 mit je 200 mm$^2$ Querschnittsfläche ergibt sich damit eine Vorspannkraft von 6.000 N bis 18.000 N. Für die Realisierung der elastischen Rückstellung geeignet erscheint z.B. eine Tellerfeder 36 nach DIN 2093 der Reihe B, Außendurchmesser 80 mm, Innendurchmesser 41 mm, Blattstärke t = 3 mm, Wölbungshöhe ho = 2,3 mm. Diese Tellerfeder 36 weist bei einem Federweg von $s_0 =$ 0,75 * ho = 1,725 mm eine Federkraft von 10.500 N auf und bei s = 1,545 mm eine Federkraft von ca. 9.400 N. Durch geringere Vorspannung kann diese Tellerfeder 36 auch auf insgesamt niedrigere Federkräfte eingestellt werden. Der Einsatz einer von den Normabmessungen abweichende Sonderausführung der Tellerfeder 36 mit z.B. geringerer Blattstärke ist ebenfalls möglich.

Bei nicht aktivierten Aktuatoren 2 entspannt sich die Tellerfeder 36, bis alle Aktuatoren 2 in ihre Nullhubposition gedrückt sind und durch die verbleibende Kraft der Tellerfeder 36 in dieser Stellung unter der vorgegebenen Vorspannkraft gehalten werden.

Im Betriebszustand der Aktuatoren 2 wird die Tellerfeder 36 durch die Kraft der Aktuatoren 2 in eine vorgegebene, gleichbleibende Anschlagposition gedrückt, die den vollständigen Arbeitshub h der Aktuatoren 2 ermöglicht. Dabei wird mit dem ersten Arbeitshub der Aktuatoren 2 der Leerweg gegen die Kraft der Tellerfeder 36 überbrückt. Da danach die Anschlagposition ständig gehalten bleibt, ergibt sich keine weitere Verlustarbeit der Aktuatoren 2.

Da die beiden Hubpositionen beispielsweise 0,18 mm auseinander liegen, ist eine sehr präzise Einstellung der Aktuatoren 2 bzw. erforderlich. Vorzugsweise wird dies durch zwei von einem einstellbaren Spalt bestimmte Anschläge realisiert. Die Einstellung des Spaltes kann vorteilhaft durch die Positionierung des Rings 42 und dessen anschließende Fixierung in der gestuften Bohrung 13 der Taumelscheibe 5 z.B. durch einen Laserschweißvorgang oder Elektronenstrahlschweißvorgang erfolgen.

Durch die Tellerfeder 36 ist auch die Funktion des rekuperativen Bremsens anders realisiert als bei dem Ausführungsbeispiel nach Fig. 1 bzw. 2.

Da beim rekuperativen Bremsen die Taumelscheibe 5 durch die Antriebsscheibe 19 angetrieben wird und sich damit gegenüber dem Antriebsmodus eine Umkehr der Kraftflussrichtung auch zwischen der Antriebsscheibe 19 und der Radnabe 26 ergibt, wird die Antriebsscheibe 19 durch das zwischen der Antriebsscheibe 19 und der Radnabe 26 wirkende Rollen-Rampen-System 27 gegenüber der Radnabe 26 um ca. den Betrag des maximalen Aktuatorhubes h im Sinne einer Vorspannung der Aktuatoren 2 angehoben. Hierbei wird der Federweg der Vorspannung der Tellerfeder 36 überwunden, so dass die Antriebsbewegung der Taumelscheibe 5 unmittelbar auf die Aktuatoren 2 einwirkt. Im weiteren Verlauf ist kein selbsttätiger Rekuperationsbetrieb möglich, wenn die Aktuatoren 2 nur generatorisch reagieren. Die Taumelbewegung der Taumelscheibe 5 muss zumindest durch einen Teil der Aktuatoren 2 aktiv, d.h. motorisch erzeugt werden. Die dabei eingesetzte elektrische Energie kann dann zusätzlich in einer Phase, in der zumindest ein Teil der Aktuatoren 2 generatorisch arbeiten, wieder zurückgewonnen werden.

Die durch die exzentrische Taumelbewegung der glockenförmigen Taumelscheibe 5 hervorgerufene Teilkreisdurchmesserdifferenz $\Delta D_T$ zwischen dem tatsächlichen Teilkreisdurchmesser $D_T$ der Verzahnung 12 der Taumelscheibe 5 und dem Teilkreisdurchmesser $D_A$ der Verzahnung 20 der Antriebsscheibe 19 beträgt das 3-fache des Aktuatorhubes h. Bei einem Aktuatorhub h von 0,36 mm und einem gewählten Modul von 0,35 der Verzahnung 12 der Taumelscheibe 5 ist es also möglich, bei maximalem Aktuatorhub h eine Verringerung der Zähnezahl der Verzahnung 12 der Taumelscheibe 5 um bis zu drei Zähnen zu simulieren.

Die praktische Realisierbarkeit einer Stufenschaltfunktion erfordert Anpassungsmaßnahmen am Taumellager und an der Taumelscheibe 5, an der Antriebsscheibe 19 sowie in der Ansteuerung der Aktuatoren 2.

Für eine Stufenschaltfunktion - wie oben erwähnt - sind für die Taumelscheibe 5 mindestens zwei unterschiedliche Hubstellungen erforderlich, wobei jedoch die Zahneingriffstiefe gleich bleiben muss. D.h. die maximale Hubstellung ist für alle Schaltstufen gleich und die minimale Hubstellung wird variiert. Ein Problem besteht darin, dass sich aufgrund der fixen Position des Schwenkzentrums S für eine bestimmte maximale Hubposition auf der gegenüberliegenden Seite der Taumelscheibe 5 stets eine bestimmte, gleichbleibende Minimalhubstellung ergibt.

Zur Lösung dieses Problems ist es erforderlich, die Position des Schwenkzentrums S oder alternativ die axiale Position der Antriebsscheibe 19 relativ zur Taumelscheibe 5 für die verschiedenen Schaltstufen veränderlich zu gestalten.

Zur Lösung des Problems sind folgende Möglichkeiten denkbar:

Die Position des Schwenkzentrums S wird nicht durch die kinematischen Zusammenhänge des Taumelgetriebes inkl. Taumellager bestimmt, sondern ausschließlich durch die Hubstellung der Aktuatoren 2, d.h. die Positionsbestimmung des Schwenkzentrums S erfolgt nicht durch die konstruktiv festgelegten kinematischen Zusammenhänge des Taumelgetriebes, sondern über ein entsprechendes Programm in der Steuerung bzw. Regelung der Antriebsvorrichtung über eine entsprechende Ansteuerung der Aktuatoren 2. In dem Fall ist nur noch ein Lager zur Querführung der Taumelscheibe 5 erforderlich.

Bei Anordnung der Aktuatoren 2 direkt über dem Teilkreis $D_T$ der Verzahnung 12 der Taumelscheibe 5 wäre dies einfach zu realisieren. Nachteilig bei einer solchen Lösung ist der geringe erzielbare Verzahnungshub $h_T$ der Taumelscheibe 5. Die an der Taumelscheibe 5 gegenüberliegenden Aktuatoren 2 müssen bei Druckbetätigung der einen Seite zur Einstellung der Taumelbewegung eine relativ hohe Zugkraft aufbringen, wodurch in gleichem Maße die mögliche Aktuatorkraft reduziert wird.

Bei einer weiteren Möglichkeit zur Problemlösung wird die Antriebsscheibe 19 mit einer mechanischen Verstelleinrichtung (hier nicht dargestellt) in den einzelnen Schaltstufen in ihrer axialen Position relativ zur Taumelscheibe 5 verändert. Für diese Positionsänderung im Bereich bis 0,5 mm ist ein spezieller Aktuator (hier nicht dargestellt) und eine entsprechende Ansteuerung erforderlich.

Schließlich kann die axiale Position der Taumelscheibe 5 auch durch die Ansteuerung der Aktuatoren 2 variiert werden. Hierzu wird zwischen dem Bauteil 15a mit kugelsektorförmiger Geometrie und der Taumelscheibe 5 anstelle einer Justierscheibe ein Federelement angeordnet, hier z.B. in Form einer Tellerfeder 36 ausgeführt. Alternativ ist als Federelement z.B. auch eine Wellfeder verwendbar. Insofern verfolgt diese Lösung in vorteilhafter Weise den gleichen konstruktiven Aufbau, wie die weiter oben beschriebene Freischaltfunktion nach der Ausführungsvariante der Antriebsvorrichtung 1 nach Fig. 3, 4 bzw. 7.

Das Federelement bzw. die Tellerfeder 36 hält das Taumellager stets unter Vorspannung und presst andererseits mit gleicher Kraft die Taumelscheibe 5 gegen die Aktuatoren 2. Idealerweise kann damit die Vorspannung der Aktuatoren 2 durch die Gehäuse 3 mit Schlitzen 4 reduziert werden oder ganz entfallen. Eine Schaltung in zwei Schaltstufen kann durch zwei Hubstellungen der Taumelscheibe 5 gegen das Bauteil 15a mit kugelsektorförmiger Geometrie realisiert werden.

Für die geringere Übersetzung ist die Tellerfeder 36 bis zu einer oberen Grenzhubstellung ausgedehnt. Die Taumelscheibe 5 nimmt dabei die Hubstellung ein, die einen maximalen Schwenkwinkel der Taumelscheibe 5 ermöglicht.

Der Verzahnungshub $h_T$ der Taumelscheibe 5 ist dabei je nach Ausführung so groß, dass die Abtriebsscheibe 19 pro Umlauf der Taumelbewegung um 2 oder 3 Zähne weitergedreht wird.

Für eine höhere Übersetzung wird die Tellerfeder 36 durch die Aktuatorkraft zusammengedrückt, bis die Taumelscheibe eine untere Anschlagposition am Bauteil 15a mit kugelsektorförmiger Geometrie erreicht hat. Der Verzahnungshub $h_T$ der Taumelscheibe 5 wird dabei soweit reduziert, dass pro Umlauf der Taumelbewegung die Abtriebsscheibe nur um einen Zahn weitergedreht wird.

Der Aktuatorhub h wird in dieser Schaltstellung nicht vollständig ausgenutzt. Die Aktuatoren 2 erreichen weder eine Vollhubstellung, noch die Nullhubstellung, sondern werden in einem mittleren Hubbereich betrieben, der gegenüber dem vollen Aktuatorhub "h" etwa um ein Drittel reduziert ist. Das Arbeitsvermögen der Aktuatoren 2 wird dabei nur zu etwa 80% ausgenutzt. Da jedoch durch die Stufenschaltfunktion -je nach realisierter Übersetzung- eine um den Faktor 2 oder 3 höhere Übersetzung des Taumelgetriebes ermöglicht wird, ergibt sich dennoch eine entsprechende Erhöhung des erzielbaren Antriebsdrehmomentes der Antriebsvorrichtung 1.

Die unterschiedlichen Hubstellungen hinsichtlich des Verzahnungshubes "$h_T$" der Taumelscheibe 5 werden realisiert, indem die Vorspannkraft und die Anschlagpositionen des Federelementes bzw. der Tellerfeder 36 und die unterschiedlichen Stellkräfte der Aktuatoren 2 in den jeweiligen Schaltstufen aufeinander angepasst werden.

Bei der höheren Übersetzung (die Antriebsscheibe 19 wird um einen Zahn pro Umlauf der Taumelscheibe 5 weitergedreht) werden die Aktuatoren 2 im Rückhub nicht bis in die Nullhubstellung zurückgeführt. D.h. die Aktuatoren 2 erzeugen auch in der Phase, in welcher der diesen Aktuatoren 2 zugeordnete Teil der Taumelscheibe 5 keine Aktuatorenkraft benötigt, zum Halten der Hubposition noch eine Aktuatorkraft.

Die zentrisch auf das Taumellager und damit auch auf das Federelement bzw. die Tellerfeder 36 wirkenden Kräfte sind damit relativ hoch. Die zentrisch wirkende Kraft, die sich aus der Summe aller wirkenden Aktuatorkräfte ergibt, kann auch auf einen vorgegebenen Betrag eingestellt werden. Wenn die Kräfte auf der nicht im Verzahnungseingriff befindlichen Seite der Taumelscheibe 5 höher gewählt werden, muss zur Einhaltung des gewünschten Antriebsmoments der Antriebsvorrichtung 1 das Kraftniveau der Aktuatoren 2 auf der Seite der Taumelscheibe 5, die sich im Verzahnungseingriff befindet, im gleichen Betrag angehoben werden.

Der Betrag der zentrisch wirkenden Kraft wird dabei gesteigert, ohne die Antriebsverhältnisse zu ändern. Das Federelement bzw. die Tellerfeder 36 ist für diese Übersetzung der Stufenschaltfunktion (die Antriebsscheibe 19 wird um einen Zahn pro Umlauf der Taumelscheibe 5 weitergedreht) so ausgelegt, dass die zentrisch auf das Taumellager wirkenden Aktuatorkräfte das Federelement bzw. die Tellerfeder 36 zusammendrücken bis die Taumelscheibe 5 den unteren Anschlag am Bauteil 15a mit kugelsektorförmiger Geometrie des Taumellagers erreicht hat.

Bei einer geringeren Übersetzung (die Antriebsscheibe 19 wird um zwei oder mehr Zähne pro Umlauf der Taumelscheibe 5 weitergedreht) sind die Aktuatorkräfte auf der im Verzahnungseingriff befindlichen Seite der Taumelscheibe 5 einseitig hoch, auf der nicht im Verzahnungseingriff befindlichen Seite der Taumelscheibe 5 gehen die Aktuatorkräfte dagegen gegen Null.

Damit sind auch die zentrisch auf das Taumellager wirkenden Kräfte relativ gering. Die Federkennlinie des Federelements bzw. der Tellerfeder 36 ist für diesen Zustand so ausgelegt, dass die wirkenden Aktuatorkräfte die Federkraft nicht überwinden, so dass sich das Federelement bzw. die Tellerfeder 36 entspannt, bis die Taumelscheibe 5 die obere Hubstellung erreicht hat.

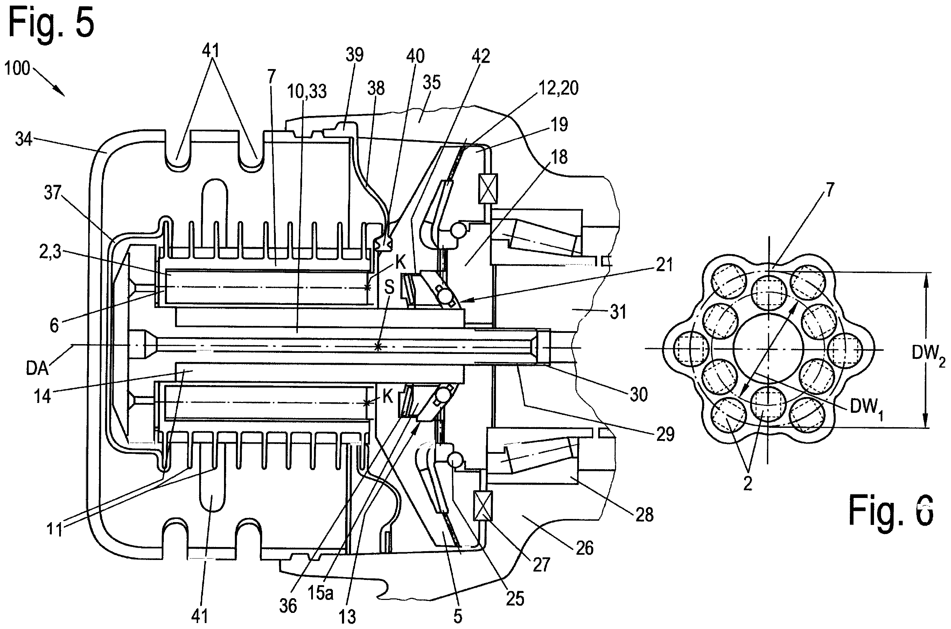

In Fig. 5 ist eine Längsschnittansicht einer weiteren Ausführungsvariante einer erfindungsgemäßen Antriebsvorrichtung 100 dargestellt. Fig. 6 zeigt eine korrespondierende Vorderansicht der weiteren Ausführungsvariante nach Fig. 5.

Um Wiederholungen zu vermeiden, werden im Folgenden nur Abweichungen bzw. Änderungen und Ergänzungen zu der oben beschriebenen Ausführungsvariante einer erfindungsgemäßen Antriebsvorrichtung 100 nach Fig. 3 bzw. Fig. 4 beschrieben.

Für eine verbesserte Wärmeabfuhr weist die Antriebsvorrichtung 100 eine Kühlluftführung zum Aktuatorengehäuse 7 von außen - also durch die Schutzkappe 34 durch Öffnungen 41 hindurch - auf.

Zu der dadurch erforderlichen Abdichtung des Kopfteils 9 der Zentralschraube 10 weist die Antriebsvorrichtung 100 eine das Kopfteil 9 umschließende Dichtung 37 auf, die am Aktuatorengehäuse 7, z. B. an einer der Kühlrippen 11 des Aktuatorengehäuses 7 befestigt ist. Unter dieser Dichtung 37 wird auch eine Verkabelung der Aktuatoren 2 von der Durchgangbohrung 32 der Zentralschraube 10 zu den Kontaktstellen der Aktuatoren 2 geführt. Die Befestigung der Dichtung kann lösbar ausgeführt sein, um eine Zugänglichkeit der Zentralschraube 10 bei Montage und im Servicefall zu ermöglichen.

Zur Abdichtung des Aktuatorengehäuses 7 auf seiner der Taumelscheibe 5 zugewandten Seite sowie des Taumelscheibengetriebes, einschließlich der Lagerstellen 22, 23, 25, 27, 28 gegen die Umgebung, weist die Antriebsvorrichtung 1 eine scheibenförmige Dichtung 38 auf. Die scheibenförmige Dichtung 38 weist an ihrem radnabenseitigen Umfang einen Dichtungswulst 39 auf, über den die Dichtung 38 zwischen der Radnabe 26 und der Schutzkappe 34 festgelegt ist. Die scheibenförmige Dichtung 38 weist an ihrem aktuatorengehäuseseitigen Umfang ebenfalls einen Dichtungswulst 40 auf, über den die Dichtung 38 zwischen dem Aktuatorengehäuse 7 und der Taumelscheibe 5 festgelegt ist. Eine Gestaltung der Dichtung 38 als membranartige Dichtung, die z.B. aus einem gewebeverstärktem Elastomer hergestellt ist, ist besonders vorteilhaft. Auf diese Weise können durch die Dichtung 38 Relativbewegungen zwischen Radnabe 26 und Aktuatorengehäuse 7 ausgeglichen werden.

Um eine Kühlluftstömung, hervorgerufen durch Fahrtwind und Thermik, zu gewährleisten, weist die Schutzkappe 34 eine Mehrzahl von Öffnungen 41 auf. Dabei umströmt die Kühlluft das Aktuatorengehäuse 7, das an seiner Außenwand Mittel zur Wärmeabfuhr, wie z.B. Kühlrippen 11 aufweist. Auf der dem Lufteintritt abgewandten Seite der Schutzkappe 34 tritt die Kühlluft durch die Öffnungen 41 in der Schutzkappe 34 wieder aus.

Zum Schutz vor groben Verschmutzungen sowie vor Spritz- und Schwallwasser ist es vorgesehen, dass die Öffnungen 41 so gestaltet sind, dass ausreichend Kühlluft eintritt, grobe Verschmutzungen sowie Spritz- und Schwallwasser jedoch abgefangen werden. Dies kann z.B. durch eine kiemenartige Gestaltung der Öffnungen 41 realisiert werden (hier nicht dargestellt).

Die Erfindung ist nicht auf die oben beschriebenen Ausführungsbeispiele beschränkt, sondern kann im Rahmen der Ansprüche natürlich modifiziert werden.

**Bezugszeichenliste**

| | |
|---|---|
| 1, 10, 100 | Antriebsvorrichtung |
| 2 | Aktuator |
| 3 | Gehäuse |
| 4 | Schlitz |
| 5 | Taumelscheibe |
| 6 | Rückwärtige Stirnwand |
| 7 | Aktuatorengehäuse |
| 8 | Vordere Stirnwand |
| 9 | Kopfteil |
| 10 | Zentralschraube |
| 11 | Kühlrippen |
| 12 | Verzahnung (Taumelscheibe) |
| 13 | Gestufte Bohrung (Taumelscheibe) |
| 14 | Tragsäule |
| 15 | Bauteil mit kugelsektorförmiger Geometrie |
| 16 | Stirnverzahnung (Taumelscheibe) |
| 17 | Stirnverzahnung (Ankerplatte) |
| 18 | Ankerplatte |

| 19 | Antriebsscheibe |
|---|---|
| 20 | Verzahnung (Antriebsscheibe) |
| 21 | Kugelsektorförmige Vertiefung |
| 22 | Lagerkäfig |
| 23 | Wälzlagerkugel |
| 24 | Gestufte Bohrung (Antriebsscheibe) |
| 25 | Wälzlager |
| 26 | Radnabe |
| 27 | Rollen-Rampen-System |
| 28 | Kegelrollenlager |
| 29 | Gewindeabschnitt |
| 30 | Gewindebohrung |
| 31 | Achskörper |
| 32 | Durchgangsbohrung |
| 33 | Schaft |
| 34 | Schutzkappe |
| 35 | Radnabengehäuse |
| 36 | Tellerfeder |
| 37 | Dichtung |
| 38 | Dichtung |
| 39 | Dichtungswulst |
| 40 | Dichtungswulst |
| 41 | Öffnung |
| 42 | Ring |
| A | Abstand |

| DA | Drehachse |
|---|---|
| DW | Wirkdurchmesser |
| $D_T$ | Teilkreisdurchmesser Taumelscheibe |
| $D_T^*$ | "simulierter" Teilkreisdurchmesser der Taumelscheibe |
| $D_A$ | Teilkreisdurchmesser Antriebsscheibe |
| $\Delta D_T$ | Teilkreisdurchmesserdifferenz Taumelscheibe |

| $f_{max}$ | maximale Taumelfrequenz |
|---|---|
| $f_n$ | Drehzahl |

| h | Arbeitshub Aktuator |
|---|---|
| $h_T$ | Verzahnungshub Taumelscheibe |
| $h_z$ | Zahnhöhe |

| $i_T$ | Taumescheibenübersetzung |
|---|---|

| K | Kraftangriffspunkt |
|---|---|

| m | Modul |
|---|---|
| $M_{max}$ | maximales Drehmoment der Antriebsvorrichtung |
| $M_{Rt}$ | theoretisches Raddrehmoment |
| $M_R$ | Raddrehmoment |

| $n_{max}$ | maximale Antriebsdrehzahl der Antriebsvorrichtung |
|---|---|

| r | Radius |
|---|---|
| R | Radius |
| $R_1$ | Radius |
| $R_{dyn}$ | dynamischer Rad-Rolldurchmesser |
| $R_T$ | Radius |

| S | Schwenkzentrum |
|---|---|

$T_{ZAB}$    Teilkreisebene

$U_A$    Umfang Antriebsscheibe
$U_T$    Umfang Taumelscheibe
$\Delta U_T$    Umfangsdifferenz Taumelscheibe

v    Fahrgeschwindigkeit

$W_{UG}$    Arbeitsvermögen pro Umdrehung
$W_0$    Arbeitsvermögen pro Hub
$W_G$    Gesamtarbeit

$z_{max}$    Zähnezahl der Antriebsscheibe

**Patentansprüche**

1. Rekuperationsfähige Antriebsvorrichtung (1, 10, 100) zur Erzeugung einer Drehbewegung, insbesondere für ein Fahrzeug, wobei die Antriebsvorrichtung (1, 10, 100) als Nabendirektantrieb ausgebildet ist und eine elektrische Maschine aufweist, die nach dem piezoelektrischen Wirkprinzip arbeitet, **dadurch gekennzeichnet, dass** die Antriebsvorrichtung (1) wenigstens drei nach dem piezoelektrischen Wirkprinzip arbeitende Aktuatoren (2) aufweist, die in einer 120 °-Teilung auf einen Wirkdurchmesser DW angeordnet sind, und dass die wenigstens drei Aktuatoren (2) jeweils ein Gehäuse (3) aufweisen.

2. Antriebsvorrichtung (1, 10, 100) nach Anspruch 1, **dadurch gekennzeichnet, dass** das Gehäuse (3) in radialer Umfangsrichtung Schlitze (4) aufweist.

3. Antriebsvorrichtung (1, 10, 100) nach einem der Ansprüche 1 bis 2, **dadurch gekennzeichnet, dass** die Antriebsvorrichtung (1, 10, 100) zwei Gruppen von Aktuatoren (2) mit jeweils wenigstens drei Aktuatoren (2) aufweist.

4. Antriebsvorrichtung (1, 10, 100) nach Anspruch 3, **dadurch gekennzeichnet, dass** die Aktuatoren (2) der ersten Gruppe eine gegenläufige Wirkrichtung zur zweiten Gruppe der Aktuatoren (2) aufweisen.

5. Antriebsvorrichtung (1, 10, 100) nach einem der Ansprüche 3 bis 4, **dadurch gekennzeichnet, dass** die wenigstens drei Aktuatoren (2) der ersten Gruppe in einer 120°-Teilung angeordnet sind und die Aktuatoren der zweiten Gruppe, die ebenfalls in einer 120°-Teilung angeordnet sind, um 60° zu den Aktuatoren (2) der ersten Gruppe verschoben sind.

6. Antriebsvorrichtung (1, 10, 100) nach einem der Ansprüche 3 bis 5, **dadurch gekennzeichnet, dass** die zwei Gruppen von Aktuatoren (2) mit jeweils wenigstens drei Aktuatoren (2) in einem weiteren gemeinsamen Aktuatorengehäuse (7) eingesetzt sind.

7. Antriebsvorrichtung (1, 10, 100) nach Anspruch 6, **dadurch gekennzeichnet, dass** das Aktuatorengehäuse (7) an seiner Außenwand Mittel zur Wärmeabfuhr, wie Kühlrippen (11), aufweist.

8. Antriebsvorrichtung (1, 10, 100) nach Anspruch 6 oder 7, **dadurch gekennzeichnet, dass** das Aktuatorengehäuse (7) die Aktuatoren (2) jeweils gehäuseartig radial und an jeweils an einem Ende der Aktuatoren (2) axial umschließt.

9. Antriebsvorrichtung (1, 10, 100) nach einem der Ansprüche 6 bis 8, **dadurch gekennzeichnet, dass** das Aktuatorengehäuse (7) von einer Tragsäule (14) durchgriffen ist.

10. Antriebsvorrichtung (1, 10, 100) nach Anspruch 9, **dadurch gekennzeichnet, dass** die Tragsäule (14) von einer Zentralschraube (10) durchgriffen ist.

11. Antriebsvorrichtung (1, 10, 100) nach Anspruch 10, **dadurch gekennzeichnet, dass** die Zentralschraube (10) ein Kopfteil (9) aufweist.

12. Antriebsvorrichtung (1, 10, 100) nach Anspruch 11, **dadurch gekennzeichnet, dass** die Zentralschraube (10) einen Schaft (33), ein Gewindeabschnitt (29) sowie eine Durchgangsbohrung (32) aufweist.

13. Antriebsvorrichtung (1, 10, 100) nach einem der Ansprüche 10 bis 12, **dadurch gekennzeichnet, dass** die aktuatorkraftführenden Bauteile (7, 14, 18) durch die Zentralschraube (10) mit einer Vorspannung beaufschlagbar sind.

14. Antriebsvorrichtung (1, 10, 100) nach Anspruch 9 , **dadurch gekennzeichnet, dass** die Tragsäule (14) aus einem technischen Keramikwerkstoff hergestellt ist oder dass die Tragsäule (14) aus Siliziumkarbid (SiC) hergestellt ist oder dass die Zentralschraube (10) aus einem Vergütungsstahl der Qualität 10.9 oder 12.9 hergestellt ist.

15. Antriebsvorrichtung (1, 10, 100) nach Anspruch 6, **dadurch gekennzeichnet, dass** das Aktuatorengehäuse (7) aus einem Werkstoff mit geringer Dichte und hohem E-Modul hergestellt ist oder dass das Aktuatorengehäuse (7) einem technischen Keramikwerkstoff hergestellt ist oder dass das Aktuatorengehäuse (7) vorzugsweise aus Siliziumkarbid (SiC) hergestellt ist.

16. Antriebsvorrichtung (1, 10, 100) nach einem der vorgenannten Ansprüche, **dadurch gekennzeichnet, dass** die Antriebsvorrichtung (1, 10, 100) eine Taumelscheibe (5) aufweist.

17. Antriebsvorrichtung (1, 10, 100) nach Anspruch 16, **dadurch gekennzeichnet, dass** Aktuatoren (2) reiner ersten Gruppe unmittelbar Aktuatoren (2) reiner zweiten Gruppe mittelbar auf die Taumelscheibe (5) wirken.

18. Antriebsvorrichtung (1, 10, 100) nach Anspruch 16 oder 17, **dadurch gekennzeichnet, dass** die Aktuatoren (2) periodisch auf die Taumelscheibe (5) wirken.

19. Antriebsvorrichtung (1, 10, 100) nach Anspruch 18, **dadurch gekennzeichnet, dass** die Aktuatoren (2) periodisch nach einer um 120° phasenversetzen Sinusfunktion auf die Taumelscheibe (5) wirken.

20. Antriebsvorrichtung (1, 10, 100) nach einem der Ansprüche 16 bis 19, **dadurch gekennzeichnet, dass** die Aktuatoren (2) der zweiten Gruppe unmittelbar und die Aktuatoren (2) der ersten Gruppe mittelbar auf das Kopfteil (9) der Zentralschraube (10) wirken.

21. Antriebsvorrichtung (1, 10, 100) nach Anspruch 20, **dadurch gekennzeichnet, dass** die Aktuatoren (2) periodisch auf das Kopfteil (9) der Zentralschraube (10) wirken, insbesondere, dass die Aktuatoren (2) periodisch nach einer um 120° phasenversetzen Sinusfunktion auf das Kopfteil (9) der Zentralschraube (10) wirken.

22. Antriebsvorrichtung (1, 10, 100) nach einem der Ansprüche 16 bis 21, **dadurch gekennzeichnet, dass** die Aktuatoren (2) der zweiten Gruppe in Bezug auf die Phasenlage der Ansteuerung der Aktuatoren (2) der ersten Gruppe so angesteuert werden, dass sich eine maximale Überlagerung der Hübe der Aktuatoren (2) ergibt.

23. Antriebsvorrichtung (1, 10, 100) nach einem der Ansprüche 16 bis 22, **dadurch gekennzeichnet, dass** die Aktuatoren (2) der zweiten Gruppe in Bezug auf die Phasenlage der Ansteuerung der Aktuatoren (2) der ersten Gruppe so angesteuert werden, dass sich eine maximale Kraftwirkung der Aktuatoren (2) auf die Taumelscheibe (5) ergibt.

24. Antriebsvorrichtung (1, 10, 100) nach einem der Ansprüche 23 bis 30, **dadurch gekennzeichnet, dass** die Taumelscheibe (5) eine Verzahnung (12) aufweist.

25. Antriebsvorrichtung (1, 10, 100) nach Anspruch 24, **dadurch gekennzeichnet, dass** die Taumelscheibe (5) eine Stirnverzahnung (16) aufweist.

26. Antriebsvorrichtung (1, 10, 100) nach einem der Ansprüche 16 bis 25, **dadurch gekennzeichnet, dass** die Taumelscheibe (5) als Verbundbauteil gestaltet ist.

27. Antriebsvorrichtung (1, 10, 100) nach einem der Ansprüche 16 bis 32, **dadurch gekennzeichnet, dass** die Taumelscheibe (5) einen Taumelscheibenkörper aufweist, der aus glasfaserverstärkten Kunststoff (GFK) hergestellt ist.

28. Antriebsvorrichtung (1, 10, 100) nach einem der vorgenannten Ansprüche, **dadurch gekennzeichnet, dass** die Antriebsvorrichtung (1, 10, 100) eine Antriebsscheibe (19) aufweist.

29. Antriebsvorrichtung (1, 10, 100) nach Anspruch 28, **dadurch gekennzeichnet, dass** die Antriebsscheibe (19) eine Verzahnung (20) aufweist.

**30.** Antriebsvorrichtung (1, 10, 100) nach Anspruch 29, **dadurch gekennzeichnet, dass** eine Verzahnung (12) der Taumelscheibe (5) mit der Verzahnung (20) der Antriebsscheibe (19) in Wirkzusammenhang steht, bzw. dass eine Verzahnung (12) der Taumelscheibe (5) mit der Verzahnung (20) der Antriebsscheibe (19) kämmt.

**31.** Antriebsvorrichtung (1, 10, 100) nach Anspruch 30, **dadurch gekennzeichnet, dass** die Verzahnung (12) der Taumelscheibe (5) und die Verzahnung (20) der Antriebsscheibe vorzugsweise einen Modul von 0,25 bis 0,7; besonders bevorzugt einen Modul von 0,35 bis 0,5 aufweisen.

**32.** Antriebsvorrichtung (1, 10, 100) nach einem der vorgenannten Ansprüche, **dadurch gekennzeichnet, dass** die Antriebsvorrichtung (1) eine Ankerplatte (18) aufweist.

**33.** Antriebsvorrichtung (1, 10, 100) nach Anspruch 32, **dadurch gekennzeichnet, dass** die Ankerplatte (18) eine Stirnverzahnung (17) aufweist.

**34.** Antriebsvorrichtung (1, 10, 100) nach Anspruch 33, **dadurch gekennzeichnet, dass** eine Stirnverzahnung (16) der Taumelscheibe (5) mit der Stirnverzahnung (17) der Ankerplatte (19) geometrisch korrespondiert.

**35.** Antriebsvorrichtung (1, 10, 100) nach einem der Ansprüche 28 bis 34, **dadurch gekennzeichnet, dass** die Antriebsvorrichtung (1) zwischen der Taumelscheibe (5) und der Antriebsscheibe (19) ein Schwenklager aufweist.

**36.** Antriebsvorrichtung (1, 10, 100) nach Anspruch 35, **dadurch gekennzeichnet, dass** das Schwenklager einen Wälzkontakt aufweist.

**37.** Antriebsvorrichtung (1, 10, 100) nach Anspruch 36, **dadurch gekennzeichnet, dass** der Wälzkontakt durch ein Bauteil (15, 15a) mit kugelsektorförmiger Geometrie, das in eine gestufte Bohrung (13) der Taumelscheibe (5) eingesetzt ist, und einer kugelsektorförmigen Vertiefung (21) der Antriebsscheibe (19), zwischen denen ein Lagerkäfig (22) angeordnet ist, in dem Wälzlagerkugeln (23) gehalten sind, gebildet ist.

**38.** Antriebsvorrichtung (1, 10, 100) nach einem der Ansprüche 28 bis 37, **dadurch gekennzeichnet, dass** die Übertragung eines Drehmoments zwischen der Antriebsscheibe (19) und einer Radnabe (26) durch ein freilaufartiges Rollen-Rampen-System (27) erfolgt.

**39.** Antriebsvorrichtung (1, 10, 100) nach einem der vorgenannten Ansprüche, **dadurch gekennzeichnet, dass** ein die Antriebsvorrichtung (1, 10, 100) aufnehmender Teil der Radnabe (26) zur Außenseite hin durch eine Schutzkappe (34) abgedeckt ist.

**40.** Antriebsvorrichtung (1, 10, 100) nach Anspruch 39, **dadurch gekennzeichnet, dass** die Schutzkappe (34) mit einem Radnabengehäuse (35) verbunden ist.

**41.** Antriebsvorrichtung (1, 10, 100) nach einem der Ansprüche 37 bis 40, **dadurch gekennzeichnet, dass** die Antriebsvorrichtung (1, 10, 100) zwischen dem Grund der gestuften Bohrung (13) der Taumelscheibe (5) und dem Bauteil (15a) mit kugelsektorförmiger Geometrie ein Federelement aufweist.

**42.** Antriebsvorrichtung (1, 10, 100) nach Anspruch 41, **dadurch gekennzeichnet, dass** das Federelement eine Tellerfeder (36) ist.

**43.** Antriebsvorrichtung (1, 10, 100) nach Anspruch 42, **dadurch gekennzeichnet, dass** sich die Tellerfeder (36) sich auf dem Grund der gestuften Bohrung (13) der Taumelscheibe (5) abstützt und mit ihrer Federkraft gegen das Bauteil (15a) mit kugelsektorförmiger Geometrie wirkt.

**44.** Antriebsvorrichtung (1, 10, 100) nach einem der Ansprüche 37 bis 43, **dadurch gekennzeichnet, dass** die Antriebsvorrichtung (1, 10, 100) zwischen dem Bauteil (15a) mit kugelsektorförmiger Geometrie und der Tellerfeder (36) einen Ring (42) aufweist.

**45.** Antriebsvorrichtung (1, 10, 100) nach einem der Ansprüche 39 bis 44, **dadurch gekennzeichnet, dass** die Schutzkappe (34) Öffnungen (41) aufweist.

**46.** Antriebsvorrichtung (1, 10, 100) nach einem der Ansprüche 11 bis 45, **dadurch gekennzeichnet, dass** die Antriebsvorrichtung (100) eine das Kopfteil (9) umschließende Dichtung (37) aufweist, die am Aktuatorengehäuse (7) befestigt ist.

47. Antriebsvorrichtung (1, 10, 100) nach einem der Ansprüche 28 bis 53, **dadurch gekennzeichnet, dass** die Antriebsvorrichtung (1) eine scheibenförmige Dichtung (38) aufweist, die das Aktuatorengehäuse (7) auf seiner taumelscheibenzugewandten Seite sowie ein Taumelscheibengetriebe, das aus der Taumelscheibe (5) und der Antriebsscheibe (19) gebildet wird, sowie Lagerstellen (22, 23, 25, 27, 28) gegen die Umgebung abdichtet.

48. Antriebsvorrichtung (1, 10, 100) nach Anspruch 47, **dadurch gekennzeichnet, dass** die scheibenförmige Dichtung (38) an ihrem radnabenseitigen Umfang einen Dichtungswulst (39) aufweist, über den die Dichtung (38) zwischen der Radnabe (26) und der Schutzkappe (34) festgelegt ist.

49. Antriebsvorrichtung (1, 10, 100) nach Anspruch 47 oder 48, **dadurch gekennzeichnet, dass** die scheibenförmige Dichtung (38) an ihrem aktuatorengehäuseseitigen Umfang einen Dichtungswulst (40) aufweist, über den die Dichtung (38) zwischen dem Aktuatorengehäuse (7) und der Taumelscheibe (5) festgelegt ist.

50. Antriebsvorrichtung (1, 10, 100) nach einem der vorgenannten Ansprüche, **dadurch gekennzeichnet, dass** die Antriebsvorrichtung (1, 10, 100) eine Freischaltfunktion aufweist.

51. Antriebsvorrichtung (1, 10, 100) nach Anspruch 50, **dadurch gekennzeichnet, dass** durch die Freischaltfunktion die Funktionen Antrieb, rekuperatives Bremsen und Freilauf der Antriebsvorrichtung (1, 10, 100) realisiert sind.

52. Antriebsvorrichtung (1, 10, 100) nach einem der vorgenannten Ansprüche, **dadurch gekennzeichnet, dass** die Antriebsvorrichtung (1, 10, 100) eine Stufenschaltfunktion aufweist.

53. Antriebsvorrichtung (1, 10, 100) nach Anspruch 52, **dadurch gekennzeichnet, dass** die Stufenschaltfunktion auf ein Taumelscheibengetriebe wirkt, wobei das Taumelscheibengetriebe aus einer Taumelscheibe (5) und einer Antriebsscheibe (19) gebildet ist, und wenigstens zwei Übersetzungsstufen des Taumelscheibengetriebes realisiert.

54. Motorwagen oder Sattelzugmaschine, **dadurch gekennzeichnet, dass** die Räder der Vorlaufachse und/oder die Räder der Nachlaufachse eine Antriebsvorrichtung (1, 10, 100) nach einem der vorgenannten Ansprüche aufweisen.

55. Motorwagen oder Sattelzugmaschine nach Anspruch 54, **dadurch gekennzeichnet, dass** der Motorwagen oder/und die Sattelzugmaschine einen Energiespeicher aufweisen, in dem die durch das rekuperative Bremsen mit der Antriebsvorrichtung (1, 10, 100) gewonnene Energie gespeichert wird und aus dem gespeicherte Energie für einen Antrieb des Motorwagens oder der Sattelzugmaschine mit der Antriebsvorrichtung (1, 10, 100) abgegeben wird.

56. Anhängerfahrzeug, **dadurch gekennzeichnet, dass** die Räder der Anhängerfahrzeugachsen des Anhängerfahrzeugs eine Antriebsvorrichtung (1, 10, 100) nach einem der Ansprüche 1 bis 53 aufweisen.

57. Anhängerfahrzeug nach Anspruch 56, **dadurch gekennzeichnet, dass** das Anhängerfahrzeug einen Energiespeicher aufweist, in dem die durch das rekuperative Bremsen mit der Antriebsvorrichtung (1, 10, 100) gewonnene Energie gespeichert wird und aus dem gespeicherte Energie für den Antrieb des Anhängerfahrzeugs mit der Antriebsvorrichtung (1, 10, 100) abgegeben wird.

58. Lastzug, bestehend aus einem Motorwagen oder einer Sattelzugmaschine nach den Ansprüchen 54 oder 55 sowie mindestens einem Anhängerfahrzeug nach den Ansprüchen 56 oder 57.

**Claims**

1. Drive apparatus with recuperation capability (1, 10, 100) for generating a rotational movement, in particular for a vehicle, wherein the drive apparatus (1, 10, 100) is in the form of a hub direct drive and has an electric machine which operates in accordance with the piezoelectric operating principle, **characterised in that** the drive apparatus (1) has at least three actuators (2) which operate in accordance with the piezoelectric operating principle and which are arranged with a 120° pitch on an effective diameter DW and **in that** the at least three actuators (2) have in each case one housing (3).

2. Drive apparatus (1, 10, 100) according to claim 1, **characterised in that** the housing (3) has slots (4) in a radial circumferential direction.

3. Drive apparatus (1, 10, 100) according to claim 1 or 2, **characterised in that** the drive apparatus (1, 10, 100) has two groups of actuators (2) with in each case at least three actuators (2).

4. Drive apparatus (1, 10, 100) according to claim 3, **characterised in that** the actuators (2) of the first group have an opposite direction of action to the second group of actuators (2).

5. Drive apparatus (1, 10, 100) according to claim 3 or 4, **characterised in that** the at least three actuators (2) of the first group are arranged with a 120° pitch, and the actuators of the second group, which are likewise arranged with a 120° pitch, are offset by 60° in relation to the actuators (2) of the first group.

6. Drive apparatus (1, 10, 100) according to any of claims 3 to 5, **characterised in that** the two groups of actuators (2) with in each case at least three actuators (2) are inserted in a further common actuator housing (7).

7. Drive apparatus (1, 10, 100) according to claim 6, **characterised in that** the actuator housing (7) has means for heat dissipation, such as for example cooling fins 11, on its outer wall.

8. Drive apparatus (1, 10, 100) according to claim 6 or 7, **characterised in that** the actuator housing (7) surrounds the actuators (2) radially in each case in the manner of a housing and axially at in each case one end of the actuators (2).

9. Drive apparatus (1, 10, 100) according to any of claims 6 to 8, **characterised in that** a supporting column (14) extends through the actuator housing (7).

10. Drive apparatus (1, 10, 100) according to claim 9, **characterised in that** a central bolt (10) extends through the supporting column (14).

11. Drive apparatus (1, 10, 100) according to claim 10, **characterised in that** the central bolt (10) has a head part (9).

12. Drive apparatus (1, 10, 100) according to claim 10, **characterised in that** the central bolt (10) has a shank (33), a threaded section (29) and a through-hole (32).

13. Drive apparatus (1, 10, 100) according to any of claims 10 to 12, **characterised in that** the actuator-force-conducting components (7, 14, 18) can be subjected to a preload by means of the central bolt (10).

14. Drive apparatus (1, 10, 100) according to claim 9, **characterised in that** the supporting column (14) is produced from a technical ceramic material, or **in that** the supporting column (14) is produced from silicon carbide (SiC), or **in that** the central bolt (10) is produced from a tempering steel of quality 10.9 or 12.9.

15. Drive apparatus (1, 10, 100) according to claim 6, **characterised in that** the actuator housing (7) is produced from a material with low density and high modulus of elasticity, or **in that** the actuator housing (7) is produced from a technical ceramic material, or **in that** the actuator housing (7) is preferably produced from silicon carbide (SiC).

16. Drive apparatus (1, 10, 100) according to any of the preceding claims, **characterised in that** the drive apparatus (1, 10, 100) has a swash plate (5).

17. Drive apparatus (1, 10, 100) according to claim 16, **characterised in that** the actuators (2) of a first group act directly, and the actuators (2) of a second group act indirectly, on the swash plate (5).

18. Drive apparatus (1, 10, 100) according to claim 16 or 17, **characterised in that** the actuators (2) act periodically on the swash plate (5).

19. Drive apparatus (1, 10, 100) according to claim 18, **characterised in that** the actuators (2) act periodically on the swash plate (5) in accordance with a sinusoidal function which is phase-offset by 120°.

20. Drive apparatus (1, 10, 100) according to any of claims 16 to 19, **characterised in that** the actuators (2) of the second group act directly, and the actuators (2) of the first group act indirectly, on the head part (9) of the central bolt (10).

21. Drive apparatus (1, 10, 100) according to claim 20, **characterised in that** the actuators (2) act periodically on the head part (9) of the central bolt (10), in particular **in that** the actuators (2) act periodically on the head part (9) of the central bolt (10) in accordance with a sinusoidal function which is phase-offset by 120°.

22. Drive apparatus (1, 10, 100) according to any of claims 16 to 21, **characterised in that** the actuators (2) of the second group are actuated, in relation to the phase position of the actuation of the actuators (2) of the first group, so as to yield a maximum overlap of the strokes of the actuators (2).

23. Drive apparatus (1, 10, 100) according to any of claims 16 to 22, **characterised in that** the actuators (2) of the second group are actuated, in relation to the phase position of the actuation of the actuators (2) of the first group, so as to yield a maximum action of force of the actuators (2) on the swash plate (5).

24. Drive apparatus (1, 10, 100) according to any of claims 16 to 23, **characterised in that** the swash plate (5) has a toothing (12).

25. Drive apparatus (1, 10, 100) according to claim 24, **characterised in that** the swash plate (5) has a spur toothing (16).

26. Drive apparatus (1, 10, 100) according to any of claims 16 to 25, **characterised in that** the swash plate (5) is formed as a composite component.

27. Drive apparatus (1, 10, 100) according to any of claims 16 to 26, **characterised in that** the swash plate (5) has a swash plate body which is produced from glass-fibre-reinforced plastic (GRP).

28. Drive apparatus (1, 10, 100) according to any of the preceding claims, **characterised in that** the drive apparatus (1, 10, 100) has a drive disc (19).

29. Drive apparatus (1, 10, 100) according to claim 28, **characterised in that** the drive disc (19) has a toothing (20).

30. Drive apparatus (1, 10, 100) according to claim 29, **characterised in that** a toothing (12) of the swash plate (5) interacts with the toothing (20) of the drive disc (19), or **in that** a toothing (12) of the swash plate (5) meshes with the toothing (20) of the drive disc (19).

31. Drive apparatus (1, 10, 100) according to claim 30, **characterised in that** the toothing (12) of the swash plate (5) and the toothing (20) of the drive disc preferably have a modulus of 0.25 to 0.7; particularly preferably a modulus of 0.35 to 0.5.

32. Drive apparatus (1, 10, 100) according to any of the preceding claims, **characterised in that** the drive apparatus (1) has an anchor plate (18).

33. Drive apparatus (1, 10, 100) according to claim 32, **characterised in that** the anchor plate (18) has a spur toothing (17).

34. Drive apparatus (1, 10, 100) according to claim 33, **characterised in that** a spur toothing (16) of the swash plate (5) geometrically corresponds to the spur toothing (17) of the anchor plate (19).

35. Drive apparatus (1, 10, 100) according to any of claims 28 to 34, **characterised in that** the drive apparatus (1) has a pivot bearing between the swash plate (5) and the drive disc (19).

36. Drive apparatus (1, 10, 100) according to claim 35, **characterised in that** the pivot bearing involves rolling contact.

37. Drive apparatus (1, 10, 100) according to claim 36, **characterised in that** the rolling contact is formed by a component (15, 15a) with spherical-sector-shaped geometry, which is inserted into a stepped bore (13) of the swash plate (5), and a spherical-sector-shaped depression (21) of the drive disc (19), between which there is arranged a bearing cage (22) in which rolling bearing balls (23) are held.

**38.** Drive apparatus (1, 10, 100) according to any of claims 28 to 37, **characterised in that** the transmission of a torque between the drive disc (19) and a wheel hub (26) is realised by means of a freewheel-like roller-ramp system (27).

**39.** Drive apparatus (1, 10, 100) according to any of the preceding claims, **characterised in that** a part of the wheel hub (26) which accommodates the drive apparatus (1, 10, 100) is covered toward the outside by a protective cap (34).

**40.** Drive apparatus (1, 10, 100) according to claim 39, **characterised in that** the protective cap (34) is connected to a wheel hub housing (35).

**41.** Drive apparatus (1, 10, 100) according to any of claims 37 to 40, **characterised in that** the drive apparatus (1, 10, 100) has a spring element between the base of the stepped bore (13) of the swash plate (5) and the component (15a) with spherical-sector-shaped geometry.

**42.** Drive apparatus (1, 10, 100) according to claim 41, **characterised in that** the spring element is a Belleville spring.

**43.** Drive apparatus (1, 10, 100) according to claim 42, **characterised in that** the Belleville spring (36) is supported on the base of the stepped bore (13) of the swash plate (5) and acts with its spring force against the component (15a) with spherical-sector-shaped geometry.

**44.** Drive apparatus (1, 10, 100) according to any of claims 37 to 43, **characterised in that** the drive apparatus (1, 10, 100) has a ring (42) between the component (15a) with spherical-sector-shaped geometry and the Belleville spring (36).

**45.** Drive apparatus (1, 10, 100) according to any of claims 39 to 44, **characterised in that** the protective cap (34) has openings (41).

**46.** Drive apparatus (1, 10, 100) according to any of claims 11 to 45, **characterised in that** the drive apparatus (100) has a seal (37) which surrounds the head part (9) and which is fastened to the actuator housing (7).

**47.** Drive apparatus (1, 10, 100) according to any of claims 28 to 46, **characterised in that** the drive apparatus (1) has a disc-shaped seal (38) which seals off the actuator housing (7) on its side facing toward the swash plate, and a swash plate gearing formed from the swash plate (5) and the drive disc (19), and bearing points (22, 23, 25, 27, 28), with respect to the surroundings.

**48.** Drive apparatus (1, 10, 100) according to claim 47, **characterised in that** the disc-shaped seal (38) has, on its wheel-hub-side circumference, a seal bead (39) by means of which the seal (38) is fixed between the wheel hub (26) and the protective cap (34).

**49.** Drive apparatus (1, 10, 100) according to claim 47 or 48, **characterised in that** the disc-shaped seal (38) has, on its actuator-housing-side circumference, a seal bead (40) by means of which the seal (38) is fixed between the actuator housing (7) and the swash plate (5).

**50.** Drive apparatus (1, 10, 100) according to any of the preceding claims, **characterised in that** the drive apparatus (1, 10, 100) has a disconnect switching function.

**51.** Drive apparatus (1, 10, 100) according to claim 50, **characterised in that** the functions of drive, recuperative braking and freewheeling of the drive apparatus (1, 10, 100) are realised by means of the disconnect switching function.

**52.** Drive apparatus (1, 10, 100) according to any of the preceding claims, **characterised in that** the drive apparatus (1, 10, 100) has a stepped switching function.

**53.** Drive apparatus (1, 10, 100) according to claim 52, **characterised in that** the stepped switching function acts on a swash plate gearing, wherein the swash plate gearing is formed from a swash plate (5) and a drive disc (19), and realises at least two transmission ratio stages of the swash plate gearing.

**54.** Tractor vehicle or semitrailer tractor, **characterised in that** the wheels of the leading axle and/or the wheels of the trailing axle have a drive apparatus (1, 10, 100) according to any of the preceding claims.

**55.** Tractor vehicle or semitrailer tractor according to claim 54, **characterised in that** the tractor vehicle and/or the semitrailer tractor have/has an energy store in which energy obtained by means of the recuperative braking by means of the drive apparatus (1, 10, 100) is stored and from which stored energy is released for the drive of the tractor vehicle or of the semitrailer tractor by means of the drive apparatus (1, 10, 100).

**56.** Trailer vehicle, **characterised in that** the wheels of the trailer vehicle axles of the trailer vehicle have a drive apparatus (1, 10, 100) as claimed in one of claims 1 to 53.

**57.** Trailer vehicle according to claim 56, **characterised in that** the trailer vehicle has an energy store in which energy obtained by means of the recuperative braking by means of the drive apparatus (1, 10, 100) is stored and from which stored energy is released for the drive of the trailer vehicle by means of the drive apparatus (1, 10, 100).

**58.** Truck-trailer combination composed of a tractor vehicle or a semitrailer tractor according to claim 54 or 55 and at least one trailer vehicle according to claim 56 or 57.


**Revendications**

**1.** Dispositif (1, 10, 100) d'entraînement à récupération pour la production d'un mouvement de rotation, notamment pour un véhicule, le dispositif (1, 10, 100) d'entraînement étant constitué sous la forme d'un entraînement direct de moyeu et ayant un moteur électrique, qui fonctionne suivant le principe d'action piézoélectrique, **caractérisé en ce que** le dispositif (1) d'entraînement a au moins trois actionneurs (2), fonctionnant suivant le principe d'action piézoélectrique, qui sont disposés suivant un pas de 120° sur un diamètre DW actif, et **en ce que** les au moins trois actionneurs (2) ont chacun un boîtier (3).

**2.** Dispositif (1, 10, 100) d'entraînement suivant la revendication 1, **caractérisé en ce que** le boîtier (3) a des fentes (4) dans la direction périphérique radiale.

**3.** Dispositif (1, 10, 100) d'entraînement suivant l'une des revendications 1 à 2, **caractérisé en ce que** le dispositif (1, 10, 100) d'entraînement a deux groupes d'actionneurs (2), ayant chacun au moins trois actionneurs (2).

**4.** Dispositif (1, 10, 100) d'entraînement suivant la revendication 3, **caractérisé en ce que** les actionneurs (2) du premier groupe ont un sens d'action contraire à celui du deuxième groupe d'actionneurs (2).

**5.** Dispositif (1, 10, 100) d'entraînement suivant l'une des revendications 3 à 4, **caractérisé en ce que** les au moins trois actionneurs (2) du premier groupe sont disposés suivant un pas de 120° et les actionneurs du deuxième groupe, qui sont disposés également suivant un pas de 120°, sont décalés de 60° par rapport aux actionneurs (2) du premier groupe.

**6.** Dispositif (1, 10, 100) d'entraînement suivant l'une des revendications 3 à 5, **caractérisé en ce que** les deux groupes d'actionneurs (2), ayant chacun au moins trois actionneurs (2), sont insérés dans un autre boîtier (7) d'actionneurs commun.

**7.** Dispositif (1, 10, 100) d'entraînement suivant la revendication 6, **caractérisé en ce que** le boîtier (7) d'actionneurs a, sur sa paroi extérieure, des moyens d'évacuation de la chaleur comme des ailettes (11) de refroidissement.

**8.** Dispositif (1, 10, 100) d'entraînement suivant la revendication 6 ou 7, **caractérisé en ce que** le boîtier (7) d'actionneurs entoure des actionneurs (2), respectivement, radialement à la manière d'un boîtier et axialement à respectivement une extrémité des actionneurs (2).

**9.** Dispositif (1, 10, 100) d'entraînement suivant l'une des revendications 6 à 8, **caractérisé en ce que** le boîtier (7) d'actionneurs est traversé par une colonne (14) porteuse.

**10.** Dispositif (1, 10, 100) d'entraînement suivant la revendication 9, **caractérisé en ce que** la colonne (14) porteuse est traversée par une vis (10) centrale.

**11.** Dispositif (1, 10, 100) d'entraînement suivant la revendication 10, **caractérisé en ce que** la vis (10) centrale a une partie (9) de tête.

**12.** Dispositif (1, 10, 100) d'entraînement suivant la revendication 11, **caractérisé en ce que** la vis (10) centrale a un fût (33), une partie (29) filetée, ainsi qu'un alésage (32) traversant.

**13.** Dispositif (1, 10, 100) d'entraînement suivant l'une des revendications 10 à 12, **caractérisé en ce que** les pièces (7, 14, 18) appliquant la force des actionneurs sont soumises à une précontrainte par la vis (10) centrale.

**14.** Dispositif (1, 10, 100) d'entraînement suivant la revendication 9, **caractérisé en ce que** la colonne (14) porteuse est fabriquée en un matériau céramique technique ou **en ce que** la colonne (14) porteuse est fabriquée en carbure de silicium (SiC) ou **en ce que** la vis (10) centrale est fabriquée en un acier traité de la qualité 10.9 ou 12.9.

**15.** Dispositif (1, 10, 100) d'entraînement suivant la revendication 6, **caractérisé en ce que** le boîtier (7) d'actionneurs est fabriqué en un matériau ayant une masse volumique petite et un grand module E ou **en ce que** le boîtier (7) d'actionneurs est fabriqué en un matériau céramique technique ou **en ce que** le boîtier (7) d'actionneurs est fabriqué, de préférence, en carbure de silicium (SiC).

**16.** Dispositif (1, 10, 100) d'entraînement suivant l'une des revendications précédentes, **caractérisé en ce que** le dispositif (1, 10, 100) d'entraînement a un disque (5) en nutation.

**17.** Dispositif (1, 10, 100) d'entraînement suivant la revendication 16, **caractérisé en ce que** Les actionneurs (2) du premier groupe actionnent directement les actionneurs (2) du deuxième groupe indirectement sur le plateau oscillant (5).

**18.** Dispositif (1, 10, 100) d'entraînement suivant la revendication 16 ou 17, **caractérisé en ce que** les actionneurs (2) agissent périodiquement sur le disque (5) en nutation.

**19.** Dispositif (1, 10, 100) d'entraînement suivant la revendication 18, **caractérisé en ce que** les actionneurs (2) agissent périodiquement sur le disque (5) en nutation suivant une fonction sinus décalée en phase de 120°.

**20.** Dispositif (1, 10, 100) d'entraînement suivant l'une des revendications 16 à 19, **caractérisé en ce que** les actionneurs (2) du deuxième groupe agissent directement et les actionneurs (2) du premier groupe indirectement sur la partie (9) de tête de la vis (10) centrale.

**21.** Dispositif (1, 10, 100) d'entraînement suivant la revendication 20, **caractérisé en ce que** les actionneurs (2) agissent périodiquement sur la partie (9) de tête de la vis (10) centrale, notamment **en ce que** les actionneurs (2) agissent sur la partie (9) de tête de la vis (10) centrale périodiquement suivant une fonction sinus décalée en phase de 120°.

**22.** Dispositif (1, 10, 100) d'entraînement suivant l'une des revendications 16 à 21, **caractérisé en ce que** les actionneurs (2) du deuxième groupe sont commandés par rapport à la position en phase de la commande des actionneurs (2) du premier groupe, de manière à tenir une superposition maximum des courses des actionneurs (2).

**23.** Dispositif (1, 10, 100) d'entraînement suivant l'une des revendications 16 à 22, **caractérisé en ce que** les actionneurs (2) du deuxième groupe sont commandés, par rapport à la position en phase de la commande des actionneurs (2) du premier groupe, de manière à obtenir un effet de force maximum des actionneurs (2) sur le disque (5) en nutation.

**24.** Dispositif (1, 10, 100) d'entraînement suivant l'une des revendications 23 à 30, **caractérisé en ce que** le disque (5) en nutation a une denture (12).

**25.** Dispositif (1, 10, 100) d'entraînement suivant la revendication 24, **caractérisé en ce que** le disque (5) en nutation a une denture (16) droite.

**26.** Dispositif (1, 10, 100) d'entraînement suivant l'une des revendications 16 à 25, **caractérisé en ce que** le disque (5) en nutation est conformé sous la forme d'une pièce composite.

**27.** Dispositif (1, 10, 100) d'entraînement suivant l'une des revendications 16 à 32, **caractérisé en ce que** le disque (5) en nutation a un corps de disque en nutation, qui est fabriqué en une matière plastique renforcée par de la fibre de verre (GFFK).

**28.** Dispositif (1, 10, 100) d'entraînement suivant l'une des revendications précédentes, **caractérisé en ce que** le dispositif (1, 10, 100) d'entraînement a un disque (19) d'entraînement.

29. Dispositif (1, 10, 100) d'entraînement suivant la revendication 28, **caractérisé en ce que** le disque (19) d'entraînement a une denture (20).

30. Dispositif (1, 10, 100) d'entraînement suivant la revendication 29, **caractérisé en ce qu'**une denture (12) du disque (5) en nutation est en relation de coopération avec la denture (20) du disque (19) d'entraînement ou **en ce qu'**une denture (12) du disque (5) en nutation engrène avec la denture (20) du disque (19) d'entraînement.

31. Dispositif (1, 10, 100) d'entraînement suivant la revendication 30, **caractérisé en ce que** la denture (12) du disque (5) en nutation et la denture (20) du disque d'entraînement ont, de préférence, un module de 0,25 à 0,7 ; d'une manière particulièrement préférée un module de 0,35 à 0,5.

32. Dispositif (1, 10, 100) d'entraînement suivant l'une des revendications précédentes, **caractérisé en ce que** le dispositif (1) d'entraînement a une plaque (18) d'armature.

33. Dispositif (1, 10, 100) d'entraînement suivant la revendication 32, **caractérisé en ce que** la plaque (18) d'armature a une denture (17) droite.

34. Dispositif (1, 10, 100) d'entraînement suivant la revendication 33, **caractérisé en ce qu'**une denture (16) droite du disque (5) en nutation correspond géométriquement à la denture (17) droite de la plaque (19) d'armature.

35. Dispositif (1, 10, 100) d'entraînement suivant l'une des revendications 28 à 34, **caractérisé en ce que** le dispositif (1) d'entraînement entre le disque (5) en nutation et la plaque (19) d'armature a un palier pivotant.

36. Dispositif (1, 10, 100) d'entraînement suivant la revendication 35, **caractérisé en ce que** le palier pivotant a un contact de roulement.

37. Dispositif (1, 10, 100) d'entraînement suivant la revendication 36, **caractérisé en ce que** le contact de roulement est formé par une pièce (15, 15a) à géométrie en forme de secteur de sphère, qui est insérée dans un trou (13) étagé du disque (5) en nutation, et une cavité (21) en forme de secteur de sphère du disque (19) d'entraînement, entre lesquelles est disposée une cage (22) de palier, dans laquelle des billes (23) du palier de roulement sont maintenues.

38. Dispositif (1, 10, 100) d'entraînement suivant l'une des revendications 28 à 37, **caractérisé en ce que** la transmission d'un couple entre le disque (19) d'entraînement et un moyeu (26) de roue s'effectue par un système rouleau-rampe (27) du type à roue libre.

39. Dispositif (1, 10, 100) d'entraînement suivant l'une des revendications précédentes, **caractérisé en ce qu'**une partie, recevant le dispositif (1, 10, 100) d'entraînement, du moyeu (26) de la roue est recouverte du côté extérieur par un chapeau (34) de protection.

40. Dispositif (1, 10, 100) d'entraînement suivant la revendication 39, **caractérisé en ce que** le chapeau (34) de protection est relié à un boîtier (35) du moyeu de roue.

41. Dispositif (1, 10, 100) d'entraînement suivant l'une des revendications 37 à 40, **caractérisé en ce que** le dispositif (1, 10, 100) d'entraînement a un élément de ressort entre le fond du trou (13) étagé du disque (5) en nutation et la pièce (15a) de géométrie en forme de secteur de sphère.

42. Dispositif (1, 10, 100) d'entraînement suivant la revendication 41, **caractérisé en ce que** l'élément de ressort est ressort (36) à disque.

43. Dispositif (1, 10, 100) d'entraînement suivant la revendication 42, **caractérisé en ce que** le ressort (36) à disque s'appuie sur le fond du trou (13) étagé du disque (5) en nutation et agit par sa force de ressort sur la pièce (15a) à géométrie en forme de secteur de sphère.

44. Dispositif (1, 10, 100) d'entraînement suivant l'une des revendications 37 à 43, **caractérisé en ce que** le dispositif (1, 10, 100) d'entraînement a une bague (42) entre la pièce (15a) à géométrie en forme de secteur de sphère et le ressort (36) à disque.

**45.** Dispositif (1, 10, 100) d'entraînement suivant l'une des revendications 39 à 44, **caractérisé en ce que** le chapeau (34) de protection a des ouvertures (41).

**46.** Dispositif (1, 10, 100) d'entraînement suivant l'une des revendications 11 à 45, **caractérisé en ce que** le dispositif (100) d'entraînement a une garniture (37) d'étanchéité entourant la partie (9) de tête fixée au boîtier (7) d'actionneurs.

**47.** Dispositif (1, 10, 100) d'entraînement suivant l'une des revendications 28 à 53, **caractérisé en ce que** le dispositif (1) d'entraînement a une garniture (38) d'étanchéité en forme de rondelle, qui rend étanche vis-à-vis de l'extérieur le boîtier (7) d'actionneurs sur son côté tourné vers le disque en nutation, ainsi qu'un engrenage de disque en nutation formé du disque (5) en nutation et du disque (19) d'entraînement, ainsi que des points (22, 23, 25, 27, 28) de palier.

**48.** Dispositif (1, 10, 100) d'entraînement suivant la revendication 47, **caractérisé en ce que** la garniture (38) d'étanchéité en forme de rondelle a, sur son pourtour du côté du moyeu de roue, un bourrelet (39) d'étanchéité, par lequel la garniture (38) d'étanchéité est fixée entre le moyeu (26) de roue et le chapeau (34) de protection.

**49.** Dispositif (1, 10, 100) d'entraînement suivant la revendication 47 ou 48, **caractérisé en ce que** la garniture (38) d'étanchéité en forme de rondelle a, sur son pourtour du côté du boîtier d'actionneurs, un bourrelet (40) d'étanchéité, par lequel la garniture (38) d'étanchéité est fixée entre le boîtier (7) d'actionneurs et le disque (5) en nutation.

**50.** Dispositif (1, 10, 100) d'entraînement suivant l'une des revendications précédentes, **caractérisé en ce que** le dispositif (1, 10, 100) d'entraînement a une fonction de déconnexion.

**51.** Dispositif (1, 10, 100) d'entraînement suivant la revendication 50, **caractérisé en ce que**, par la fonction de déconnexion, des fonctions d'entraînement freinage, récupération et roue libre du dispositif (1, 10, 100) d'entraînement sont réalisées.

**52.** Dispositif (1, 10, 100) d'entraînement suivant l'une des revendications précédentes, **caractérisé en ce que** le dispositif (1, 10, 100) d'entraînement a une fonction d'actionnement à palier.

**53.** Dispositif (1, 10, 100) d'entraînement suivant la revendication 52, **caractérisé en ce que** la fonction d'actionnement à palier agit sur une transmission à disque en nutation, la transmission à disque en nutation étant constituée d'un disque (5) en nutation et d'un disque (19) d'entraînement et réalisant au moins deux étages de transmission de la transmission à disque en nutation.

**54.** Voiture à moteur ou tracteur semi-remorque, **caractérisé en ce que** les roues de l'essieu avant et/ou les roues de l'essieu arrière ont un dispositif (1, 10, 100) d'entraînement suivant l'une des revendications précédentes.

**55.** Voiture à moteur ou tracteur semi-remorque suivant la revendication 54, **caractérisé en ce que** la voiture à moteur ou/et le tracteur semi-remorque ont un accumulateur d'énergie, dans lequel l'énergie obtenue par le freinage récupératif par le dispositif (1, 10, 100) d'entraînement par le frein récupératif est emmagasinée et de l'énergie emmagasinée est cédée pour un entraînement de la voiture à moteur ou du tracteur semi-remorque par le dispositif (1, 10, 100) d'entraînement.

**56.** Véhicule à remorque, **caractérisé en ce que** les roues des essieux du véhicule à remorque ont un dispositif (1, 10, 100) d'entraînement suivant l'une des revendications 1 à 53.

**57.** Véhicule à remorque suivant la revendication 56, **caractérisé en ce que** le véhicule à remorque a un accumulateur d'énergie, dans lequel l'énergie obtenue par le dispositif (1, 10, 100) d'entraînement par le frein récupératif est emmagasinée et de l'énergie emmagasinée est cédée pour l'entraînement du véhicule à remorque par le dispositif (1, 10, 100) d'entraînement.

**58.** Train routier constitué d'une voiture à moteur ou d'un tracteur semi-remorque suivant les revendications 54 ou 55, ainsi que d'au moins un véhicule à remorque suivant les revendications 56 ou 57.

Fig. 1

Fig. 2

EP 3 262 745 B1

# Fig. 3

# Fig. 4

EP 3 262 745 B1

## Fig. 5

100

41  39  40  42
7  10,33  38  35  12,20
34  19
18
37
2,3
6  K
S
14
DA
11  K
41  36  15a  13  5  25  27  26  28  29  30  31  21

## Fig. 6

7
DW₂
DW₁
2

EP 3 262 745 B1

EP 3 262 745 B1

# Fig. 7

35

FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010042907 A1
- DE 102006046419 A1
- DE 102006046419 A2
- DE 4110638 A1
- DE 4110468 A1
- DE 19948224 C1
- DE 102011118543 A1
- DE 102008001565 A1
- WO 2011163530 A1
- US 5763980 A